(19) Europäisches Patentamt
European Patent Office
Office européen des brevets

(11) **EP 4 765 653 A1**

(12) **EUROPEAN PATENT APPLICATION**

(43) Date of publication:
24.06.2026 Bulletin 2026/26

(21) Application number: 25223840.7

(22) Date of filing: **16.12.2025**

(51) International Patent Classification (IPC):
*H04B 1/04* (2006.01)     *H04B 1/525* (2015.01)
*H04B 1/18* (2006.01)

(52) Cooperative Patent Classification (CPC):
**H04B 1/0458; H04B 1/18; H04B 1/525**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **20.12.2024  CN 202411902430**

(71) Applicant: **GUANGDONG OPPO MOBILE
TELECOMMUNICATIONS
CORP., LTD.
Dongguan, Guangdong 523860 (CN)**

(72) Inventors:
• **CHEN, Feng**
**No.18 Haibin Road Wusha,Chang'an,Dongguan
Guangdon, 523860 (CN)**
• **TONG, Lin**
**No.18 Haibin Road Wusha,Chang'an,Dongguan
Guangdon, 523860 (CN)**

(74) Representative: **Penza, Giancarlo**
**Bugnion S.p.A.
Viale Lancetti, 17
20158 Milano (IT)**

(54) **RADIO FREQUENCY SYSTEM, IMPEDANCE TUNING METHOD, AND ELECTRONIC DEVICE**

(57)     Provided are a radio frequency (RF) system, an impedance tuning method, and an electronic device. The RF system includes a first RF path, a second RF path, a first power detector, and a processor. The first RF path includes a first coupler and a first antenna radiator. The second RF path includes a second antenna radiator. The first power detector is electrically connected with the first coupler, and used to obtain, through the first coupler, a first coupled power received by the first antenna radiator from the second antenna radiator when the second antenna radiator transmits an antenna signal. The processor is configured to obtain a first voltage standing wave ratio (VSWR) based on the first coupled power, and generate, when the first VSWR is outside a preset VSWR range, a first impedance adjustment instruction used to make the first VSWR fall within the preset VSWR range. It enables tuning for antenna impedance matching.

EP 4 765 653 A1

**Description**

TECHNICAL FIELD

The present disclosure relates to the field of communication technologies, and particularly to a radio frequency (RF) system, an impedance tuning method, and an electronic device.

BACKGROUND

With the wide application of electronic devices, the usage environment of electronic devices has become increasingly complex. For example, the antenna of an electronic device is held by a hand, the electronic device is placed in a pocket or worn on the body of a user, or the electronic device is affected by other metal conductors. In addition, as there are more and more components in the electronic devices, the usage environment of the antenna is also more complex. This may lead to the problem of impedance mismatch of the antenna. For example, the impedance of a signal source is 50 $\Omega$, but the antenna impedance changes according to the frequency bands and usage conditions. When there is impedance mismatch, the RF power transmitted between the RF front-end and the antenna would be decreased. For example, when a mobile phone transmits a signal, not all available power from the signal source can be transmitted to the load (antenna), which may cause high signal loss. Large mismatch will seriously affect the radiation power of the antenna and the total isotropic sensitivity (TIS) performance of the antenna, thereby affecting the communication.

SUMMARY

Embodiments of the present disclosure provides an RF system, an impedance tuning method, and an electronic device, which are conducive to antenna impedance tuning. The invention is set out in the appended set of claims.

BRIEF DESCRIPTION OF THE DRAWINGS

In order to more clearly illustrate technical solutions of the embodiments of the present disclosure, drawings required for the description of the embodiments will be briefly introduced below.

FIG. 1 is a circuit framework diagram of an electronic device provided in the embodiments of the present disclosure.
FIG. 2 is an exploded circuit framework diagram of the electronic device provided in the embodiments of the present disclosure.
FIG. 3 is a first partial circuit framework diagram of an RF system provided in the embodiments of the present disclosure.
FIG. 4 is a second partial circuit framework diagram of the RF system provided in the embodiments of the present disclosure.
FIG. 5 is a third partial circuit framework diagram of the RF system provided in the embodiments of the present disclosure.
FIG. 6 is a fourth partial circuit framework diagram of the RF system provided in the embodiments of the present disclosure.
FIG. 7 is a fifth partial circuit framework diagram of the RF system provided in the embodiments of the present disclosure.
FIG. 8 is a sixth partial circuit framework diagram of the RF system provided in the embodiments of the present disclosure.
FIG. 9 is a seventh partial circuit framework diagram of the RF system provided in the embodiments of the present disclosure.
FIG. 10 is a circuit framework diagram of a first RF path provided in the embodiments of the present disclosure.
FIG. 11 is a circuit framework diagram of a second RF path provided in the embodiments of the present disclosure.
FIG. 12 is an eighth circuit framework diagram of the RF system provided in the embodiments of the present disclosure.
FIG. 13 is a ninth circuit framework diagram of the RF system provided in the embodiments of the present disclosure.
FIG. 14 is a tenth circuit framework diagram of the RF system provided in the embodiments of the present disclosure.
FIG. 15 is an eleventh circuit framework diagram of the RF system provided in the embodiments of the present disclosure.
FIG. 16 is a twelfth circuit framework diagram of the RF system provided in the embodiments of the present disclosure.
FIG. 17 is a thirteenth circuit framework diagram of the RF system provided in the embodiments of the present disclosure.

FIG. 18 is a fourteenth circuit framework diagram of the RF system provided in the embodiments of the present disclosure.

FIG. 19 is a fifteenth circuit framework diagram of the RF system provided in the embodiments of the present disclosure.

FIG. 20 is a schematic diagram illustrating a signal flow of the first RF path for detecting an impedance matching state as provided in the embodiments of the present disclosure.

FIG. 21 is a schematic diagram illustrating a signal flow of the first RF path when serving as a receiving antenna as provided in the embodiments of the present disclosure.

FIG. 22 is a first flowchart of an impedance tuning method provided in the embodiments of the present disclosure.

FIG. 23 is a second flowchart of the impedance tuning method provided in the embodiments of the present disclosure.

FIG. 24 is a flowchart of operation S200 in the impedance tuning method provided in the embodiments of the present disclosure.

FIG. 25 is a flowchart of operation S 100 in the impedance tuning method provided in the embodiments of the present disclosure.

FIG. 26 is a circuit framework diagram of a communication device provided in the embodiments of the present disclosure.

## DETAILED DESCRIPTION OF PREFERRED EMBODIMENTS

The technical solutions of the present disclosure will be clearly and comprehensively described below in conjunction with the drawings. Apparently, the embodiments described in the present disclosure are only a part of the embodiments, not all the embodiments. All other embodiments obtained by those ordinary skilled in the art based on the embodiments provided in the disclosure without any creative work shall fall within the protection scope of the disclosure.

Reference to "an embodiment" in the present disclosure means that a specific feature, structure, or characteristic described in connection with the embodiment may be included in at least one embodiment of the present disclosure. The appearance of the phrase in various places in the specification does not necessarily refer to the same embodiment, nor is it an exclusive or independent embodiment mutually exclusive with other embodiments. Those skilled in the art can explicitly and implicitly understand that the embodiments described in the present disclosure can be combined with other embodiments.

Terms "first", "second", etc. in the specification, claims, and the drawings of the present disclosure are used to distinguish different objects, not to describe a specific order. In addition, the terms "comprise/include" and "have" and any variations thereof are intended to cover non-exclusive inclusion. For example, an assembly or device including one or more components is not limited to the listed one or more components, but optionally further includes one or more components which are not listed but inherent to the illustrated product, or one or more components that should be included based on the described function.

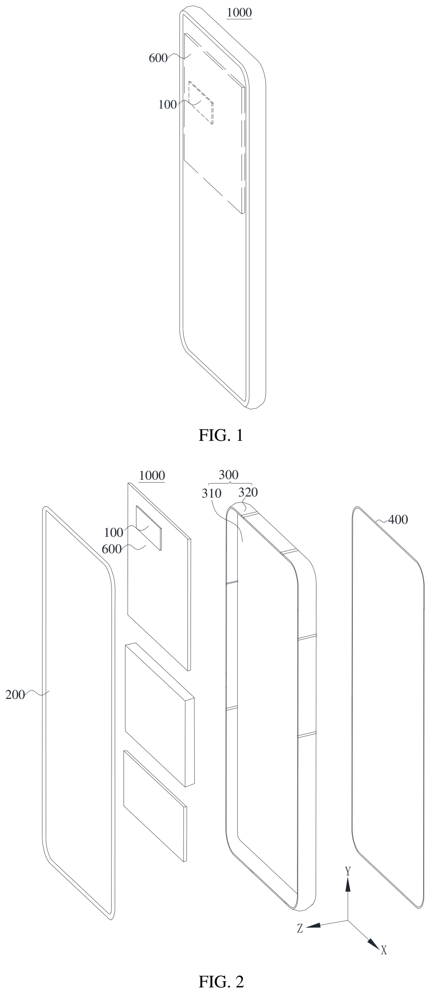

As illustrated in FIG. 1, it schematically illustrates the structure of an electronic device 1000 provided in the embodiments of the present disclosure. The electronic device 1000 includes but is not limited to a mobile phone, a tablet computer, a laptop computer, a desktop computer, a wearable device, a drone, a robot, a digital camera, and other devices with communication functions. The embodiments of the present disclosure take a mobile phone as an example for illustration, and other electronic devices may refer to the embodiments.

As illustrated in FIG. 2, it is a schematic partial exploded diagram of the electronic device 1000 provided in the embodiments of the present disclosure. Taking the electronic device 1000 as a mobile phone, the working environment of the RF system 100 is described. The electronic device 1000 includes a display screen 200, a middle frame 300, and a rear cover 400 sequentially arranged along the thickness direction. The middle frame 300 includes a middle plate 310 and a frame 320 provided along the periphery of the middle plate 310. The frame 320 is a conductive frame such as a metal frame. Accommodating spaces are defined between the display screen 200 and the middle plate 310 and between the middle plate 310 and the rear cover 400, to accommodate components such as a circuit board 600, a camera module, a receiver module, a battery 700, a sub-board 800, and various sensors. One side of the frame 320 along the thickness direction is connected with the edge of the display screen 200, and the other side of the frame 320 along the thickness direction is connected with the edge of the rear cover 400, thereby defining a complete appearance structure of the electronic device 1000. In the embodiments, the frame 320 and middle plate 310 are of an integrated structure, and the frame 320 and the rear cover 400 are discrete structures. The foregoing illustrates the working environment of the RF system 100 taking a mobile phone as an example, but the RF system 100 of the present disclosure is not limited to the above working environment.

The circuit architecture of the RF system 100 will be specifically described below.

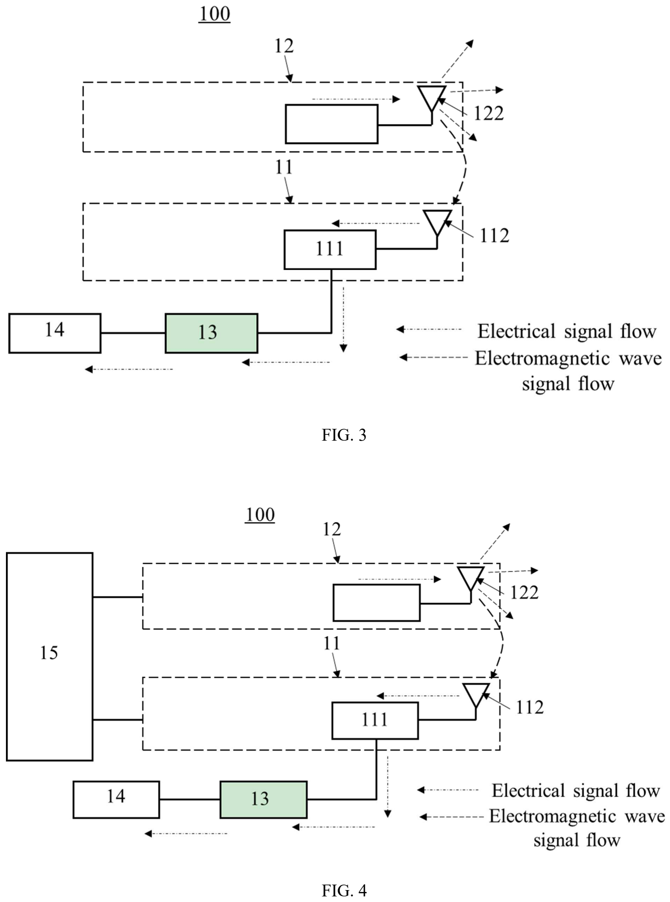

As illustrated in FIG. 3, it is a circuit architecture diagram of the RF system 100 provided in the embodiments of the present disclosure.

As illustrated in FIG. 3, the RF system 100 includes a first RF path 11, a second RF path 12, a first power detector

13, and a processor 14.

The RF system 100 is implemented in a form including but not limited to a circuit, a device, an independently packaged chip, or a chip integrated and packaged with other circuits that is provided on the circuit board 600.

The first RF path 11, the second RF path 12, the first power detector 13, and the processor 14 each are implemented in a form including but not limited to a circuit, a device, an independently packaged chip, or a chip integrated and packaged with other circuits that is provided on the circuit board 600.

As illustrated in FIG. 3, the first RF path 11 includes a first coupler 111 and a first antenna radiator 112.

One terminal of the first coupler 111 is electrically connected with the first antenna radiator 112, and the other terminal of the first coupler 111 is used to be electrically connected with an RF transceiver module. The first antenna radiator 112 is a port for transmitting and receiving antenna signals on the electronic device.

The "electrical connection" in the present disclosure includes but is not limited to direct electrical connection or indirect electrical connection.

The first coupler 111 is configured for signal distribution, power distribution, signal monitoring, phase adjustment, etc. The first coupler 111 may split one RF power into several RF powers in a specific proportion, for detecting or monitoring signals, such as power measurement and wave detection. The first coupler 111 is usually configured to couple a signal from one transmission line to another transmission line, to realize signal distribution and synthesis. The first coupler 111 may also be configured to monitor characteristics such as the amplitude and phase of a signal, to meet different communication requirements. For example, a directional coupler may separate the forward and backward waves in the transmission line, and determine the reflection coefficient at the measured position by measuring the reflected power of the signal input terminal, thereby controlling and measuring the output power level of the RF transceiver module.

The material of the first antenna radiator 112 is not specifically limited in the present disclosure. In some implementations, the first antenna radiator 112 is made of a conductive material, including but not limited to metal, alloy or other conductive materials. The shape of the first antenna radiator 112 is not specifically limited in the present disclosure. For example, the shape of the first antenna radiator 112 includes but is not limited to a strip shape, a sheet shape, a rod shape, a coating shape, a film shape, etc. The first antenna radiator 112 illustrated in FIG. 3 is only an example and cannot limit the shape of the first antenna radiator 112 provided in the present disclosure. In the embodiments, the first antenna radiator 112 is in a strip shape. The extension track of the first antenna radiator 112 is not limited in the present disclosure. In some implementations, the first antenna radiator 112 may extend along a straight line, a curve, or a folded line. The first antenna radiator 112 in the extension track may be a line with a uniform width, or a strip with an unequal width such as a strip with a gradient width or a widened area.

The form of the first antenna radiator 112 is not specifically limited in the present disclosure. In some implementations, the form of the first antenna radiator 112 includes but is not limited to a metal frame 320, a metal frame embedded in a plastic frame 320, a metal radiator located inside or on the surface of the frame 320, a flexible printed circuit (FPC) antenna formed on an FPC, a laser direct structuring (LDS) antenna, a print direct structuring (PDS) antenna, a conductive sheet antenna (such as a metal bracket antenna), etc. In the embodiments, the first antenna radiator 112 is taken as a part of the metal frame 320 of the electronic device 1000 as an example.

As illustrated in FIG. 3, the second RF path 12 includes a second antenna radiator 122.

As illustrated in FIG. 4, the second antenna radiator 122 is configured to be electrically connected with the RF transceiver module 15. The second antenna radiator 122 and the first antenna radiator 112 may be electrically connected with a same RF transceiver module 15 or different RF transceiver modules 15.

In the embodiments, it is illustrated by taking a case where the second antenna radiator 122 and the first antenna radiator 112 are connected with the same RF transceiver module 15 as an example.

For the material and form of the second antenna radiator 122, reference may be made to the material and form of the first antenna radiator 112.

When the second antenna radiator 122 transmits an antenna signal, the first antenna radiator 112 is capable of receiving a coupled signal from the second antenna radiator 122. In other words, the first antenna radiator 112 and the second antenna radiator 122 are coupled.

In some implementations, the length of the first antenna radiator 112 is the same as or similar to that of the second antenna radiator 122. Thus, the working frequency band of the first antenna radiator 112 is the same as or similar to that of the second antenna radiator 122, which is conducive to forming a coupling field between the second antenna radiator 122 and the first antenna radiator 112 when the second antenna radiator 122 transmits an antenna signal, so that the first antenna radiator 112 can receive the antenna signal of a certain strength.

In some implementations, the working frequency band of the first antenna radiator 112 is similar to or the same as that of the second antenna radiator 122. The working frequency band of the first antenna radiator 112 is not specifically limited in the present disclosure. The working frequency band of the first antenna radiator 112 includes but is not limited to the low band (LB), Mid-band (MB), high band (HB), and ultra-high band (UHB) of cellular mobile signals. The working frequency band of the first antenna radiator 112 includes but is not limited to the GPS band, Wi-Fi band, etc.

The working mode of the RF transceiver module 15 includes but is not limited to a time division duplex (TDD) mode or a frequency division duplex (FDD) mode.

Further, in some implementations, the coupling between the first antenna radiator 112 and the second antenna radiator 122 may be achieved through for example spatial coupling.

In the embodiments of the present disclosure, the coupling strength between the first antenna radiator 112 and the second antenna radiator 122 is greater than or equal to a first coupling strength, so that the first antenna radiator 112 can receive an antenna signal when the second antenna radiator 122 transmits the antenna signal, thereby creating a condition for detecting the impedance mismatch of the first RF path 11.

In other words, the degree of isolation between the first antenna radiator 112 and the second antenna radiator 122 is less than or equal to a first degree of isolation.

In some implementations, the distance between the first antenna radiator 112 and the second antenna radiator 122 is less than or equal to a first preset distance. If the distance between the first antenna radiator 112 and the second antenna radiator 122 is too large, the first antenna radiator 112 may not be coupled with the second antenna radiator 122, resulting in a fact that the first antenna radiator 112 is unable to receive an antenna signal when the second antenna radiator 122 transmits the antenna signal. It is thus unable to create a condition for detecting the impedance mismatch of the first RF path 11.

In the embodiments of the present disclosure, the coupling strength between the first antenna radiator 112 and the second antenna radiator 122 is less than or equal to a second coupling strength. If the coupling strength between the first antenna radiator 112 and the second antenna radiator 122 is too large, there would be a problem of excessive mutual influence. The signal transmitted by the second antenna radiator 122 may affect a received signal of the first antenna radiator 112, leading to inaccurate strength of the received signal of the first antenna radiator 112.

In other words, the degree of isolation between the first antenna radiator 112 and the second antenna radiator 122 is greater than or equal to a second degree of isolation.

In some implementations, the distance between the first antenna radiator 112 and the second antenna radiator 122 is greater than or equal to a second preset distance. If the distance between the first antenna radiator 112 and the second antenna radiator 122 is too small, the degree of isolation between the first antenna radiator 112 and the second antenna radiator 122 may be too small, resulting in inaccurate strength of a received signal of the first antenna radiator 112 when the second antenna radiator 122 transmits an antenna signal.

In the implementations, by designing the coupling strength between the first antenna radiator 112 and the second antenna radiator 122 to be greater than or equal to the first coupling strength and less than or equal to the second coupling strength, when the second antenna radiator 122 transmits an antenna signal, the first antenna radiator 112 is capable of receiving the antenna signal, thereby creating a condition for detecting the impedance mismatch of the first RF path 11; in addition, it also causes the influence of the transmitted signal of the second antenna radiator 122 on a received signal of the first antenna radiator 112 to be minimized or substantially eliminated, thereby improving the working efficiency of the first antenna radiator 112 and the second antenna radiator 122.

In some implementations, in conjunction with FIG. 2, the first antenna radiator 112 and the second antenna radiator 122 may be provided at the frame 320. The first antenna radiator 112 and the second antenna radiator 122 may be provided at a same side or different sides of the frame 320.

In some implementations, the first antenna radiator 112 and the second antenna radiator 122 are provided on different sides to receive or transmit antenna signals in different directions.

In the embodiments, as illustrated in FIG. 4, the first power detector 13 is electrically connected with the first coupler 111. The first power detector 13 may be configured to monitor the output power of the RF transceiver module 15 to ensure that it is within a specified range. By feeding back the power detection result from the first power detector to the processor 14, the transmit power may also be adjusted, thereby optimizing the signal quality and system performance. In the RF system 100, the power detector monitors the signal strength, evaluates the link quality, and performs necessary power control, to ensure the stability and reliability of communication.

In the embodiments, as illustrated in FIG. 4, the first power detector 13 is configured to obtain, through the first coupler 111, a first coupled power of an antenna signal received by the first antenna radiator 112 from the second antenna radiator 122 when the second antenna radiator 122 transmits the antenna signal.

The first coupled power includes a coupled power detected by the first power detector 13 that is from the first antenna radiator 112 to the first coupler 111, and also includes a coupled power detected by the first power detector 13 that is from the first coupler 111 to the first antenna radiator 112 after reflection on the first RF path 11.

In some implementations, as illustrated in FIG. 4, the first power detector 13 may be a module independent of the RF transceiver module 15.

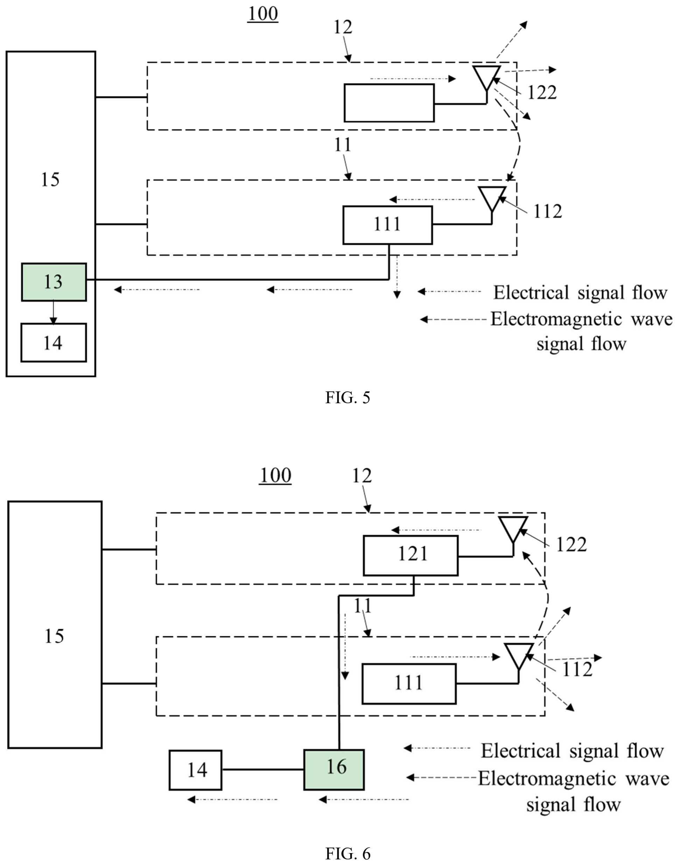

In some implementations, as illustrated in FIG. 5, the first power detector 13 may also be integrated into the RF transceiver module 15.

In some implementations, the first coupler 111 includes but is not limited to a bidirectional coupler.

Since the first antenna radiator 112 and the second antenna radiator 122 meet the coupling conditions, when the second antenna radiator 122 serves as a transmitting antenna of a first frequency band and the first antenna radiator 112 serves as a receiving antenna, the first antenna radiator 112 can receive a signal of the first frequency band through spatial coupling, and the first coupler 111 transmits the signal of the first frequency band toward the RF transceiver module 15. The first power detector 13 may monitor the power of the signal of the first frequency band transmitted by the first coupler 111, and then obtain the first coupled power.

In the embodiments, the processor 14 is electrically connected with the first power detector 13. The processor 14 is configured to receive the first coupled power from the first power detector 13, obtain a first voltage standing wave ratio on the first RF path 11 based on the first coupled power, and generate a first impedance adjustment instruction when the first voltage standing wave ratio is outside a preset standing wave ratio range.

The first voltage standing wave ratio (VSWR) refers to the ratio of the voltage amplitude at the peak to the voltage amplitude at the trough of the standing wave in a transmission line (the first RF path 11 in this embodiment). It is also referred to as a standing wave coefficient or standing wave ratio. When the standing wave ratio is equal to 1, it shows that the impedance of the feeder line and the impedance of the antenna are completely matched; and in this case, all high-frequency energy is radiated by the antenna without reflection loss of energy. When the standing wave ratio is infinite, it shows that there is total reflection, and no energy is radiated.

The preset standing wave ratio range is not specifically limited in the embodiments. In some implementations, a suitable preset standing wave ratio range may be determined according to the efficiency of the working frequency band. A standing wave ratio threshold X may be determined according to the efficiency of the working frequency band of for example -7 dB (this is an example, and the present disclosure is not limited thereto). The preset standing wave ratio range may be 1 to X.

The processor 14 may obtain the first voltage standing wave ratio on the first RF path 11 based on the first coupled power, and determine, through comparison, whether the first voltage standing wave ratio is within the preset standing wave ratio range.

In some implementations, the processor 14 may be a module independent of the RF transceiver module 15, including but not limited to a microcontroller unit (MCU). The processor 14 may also be integrated into the RF transceiver module 15.

When the first voltage standing wave ratio is outside the preset standing wave ratio range, it shows that there may be impedance mismatch. The processor 14 generates the first impedance adjustment instruction which may be used to control an impedance tuning circuit on the first RF path 11 to tune the impedance of the first RF path 11 until the first voltage standing wave ratio is within the preset standing wave ratio range, so that the first RF path 11 has good working efficiency.

In other words, the first impedance adjustment instruction is used to make the first voltage standing wave ratio fall within the preset standing wave ratio range.

The foregoing describes that the first voltage standing wave ratio on the first RF path 11 is determined by detecting the coupled signal received by the first RF path 11 from the second antenna radiator 122, and it is determined whether the impedance of the first RF path 11 needs to be tuned. Certainly, in some other implementations, a second voltage standing wave ratio on the second RF path 12 may also be determined by detecting a coupled signal received by the second RF path 12 from the first antenna radiator 112, and it is determined whether the impedance of the second RF path 12 needs to be tuned.

The above two RF paths (the first RF path 11 and the second RF path 12) are only examples. In some other implementations, the inventive concept of the present disclosure may also be applied to three RF paths, four RF paths, etc.

The RF system 100 provided by the present disclosure includes the first RF path 11, the second RF path 12, the first power detector 13, and the processor 14. The first RF path 11 includes the first coupler 111 and the first antenna radiator 112. The second RF path 12 includes the second antenna radiator 122. When the second antenna radiator 122 transmits an antenna signal, the first antenna radiator 112 is capable of receiving a coupled signal from the second antenna radiator 122. The first power detector 13 is electrically connected with the first coupler 111, and is configured to obtain, through the first coupler 111, the first coupled power received by the first antenna radiator 112 from the second antenna radiator 122 when the second antenna radiator 122 transmits the antenna signal. The processor 14 is configured to obtain the first voltage standing wave ratio based on the first coupled power, and generate the first impedance adjustment instruction when the first voltage standing wave ratio is outside a preset standing wave ratio range, where the first impedance adjustment instruction is used to make the first voltage standing wave ratio fall within the preset standing wave ratio range. In this way, it enables tuning for antenna impedance matching, and avoids impedance mismatch.

In some implementations, as illustrated in FIG. 6, the second RF path 12 further includes a second coupler 121. The RF system 100 further includes a second power detector 16.

The second coupler 121 and the second power detector 16 each are implemented in a form including but not limited to a circuit, a device, an independently packaged chip, or a chip integrated and packaged with other circuits that is provided on the circuit board 600.

As illustrated in FIG. 6, the second coupler 121 is electrically connected with the second antenna radiator 122. A first terminal of the second coupler 121 is configured to be electrically connected with the RF transceiver module 15, and a second terminal of the second coupler 121 is electrically connected with the second antenna radiator 122. For the circuit structure of the second coupler 121, reference may be made to the circuit structure of the first coupler 111.

As illustrated in FIG. 6, the second power detector 16 is electrically connected with the second coupler 121. The second power detector 16 is electrically connected with a third terminal of the second coupler 121.

The second power detector 16 and the first power detector 13 may be a same power detector or two power detectors. When the second power detector 16 and the first power detector 13 are two power detectors, the second power detector 16 may refer to the first power detector 13.

The second power detector 16 is configured to, when the first antenna radiator 112 transmits an antenna signal, obtain, through the second coupler 121, a second coupled power of the antenna signal received by the second antenna radiator 122 from the first antenna radiator 112.

Certainly, the second power detector 16 can detect whether the impedance of the second RF path 12 is mismatched, so that the impedance of the second RF path 12 is adjusted later. Further, the second power detector 16 can detect the transmit power and the received power on the second RF path 12, so that the second power detector 16 has multiple uses.

The second coupled power includes a coupled power detected by the second power detector 16 that is from the second antenna radiator 122 to the second coupler 121, and also includes a coupled power detected by the second power detector 16 that is from the second coupler 121 to the second antenna radiator 122 after reflection on the second RF path 12.

Specifically, since the first antenna radiator 112 and the second antenna radiator 122 meet the coupling conditions, when the first antenna radiator 112 serves as a transmitting antenna of a first frequency band and the second antenna radiator 122 serves as a receiving antenna, the second antenna radiator 122 can receive a signal of the first frequency band through spatial coupling, and the second coupler 121 transmits the signal of the first frequency band toward the RF transceiver module 15. The second power detector 16 may monitor the power of the signal of the first frequency band transmitted by the second coupler 121, and then obtain the second coupled power of the antenna signal of the first frequency band.

In the embodiments, as illustrated in FIG. 6, the processor 14 is electrically connected with the second power detector 16. The processor 14 is configured to receive the second coupled power from the second power detector 16, obtain a second voltage standing wave ratio on the second RF path 12 based on the second coupled power, and generate a second impedance adjustment instruction when the second voltage standing wave ratio is outside the preset standing wave ratio range.

The processor 14 may obtain the second voltage standing wave ratio on the second RF path 12 based on the second coupled power, and determine, through comparison, whether the second voltage standing wave ratio is within the preset standing wave ratio range.

When the second voltage standing wave ratio is outside the preset standing wave ratio range, it shows that there may be impedance mismatch. The processor 14 generates the second impedance adjustment instruction which may be used to control an impedance tuning circuit on the second RF path 12 to tune an impedance of the second RF path 12 until the second voltage standing wave ratio is within the preset standing wave ratio range, so that the second RF path 12 has good working efficiency.

In other words, the second impedance adjustment instruction is used to make the second voltage standing wave ratio fall within the preset standing wave ratio range.

In the embodiments, the first RF path 11 may receive an antenna signal from the second antenna radiator 122 through spatial coupling, to detect whether the impedance of the first RF path 11 is mismatched. Further, the second RF path 12 may also receive an antenna signal from the first antenna radiator 112 through spatial coupling, to detect whether the impedance of the second RF path 12 is mismatched. This is beneficial to monitor the impedance matching on the first RF path 11 and the second RF path 12, improving the efficiency of the working frequency band.

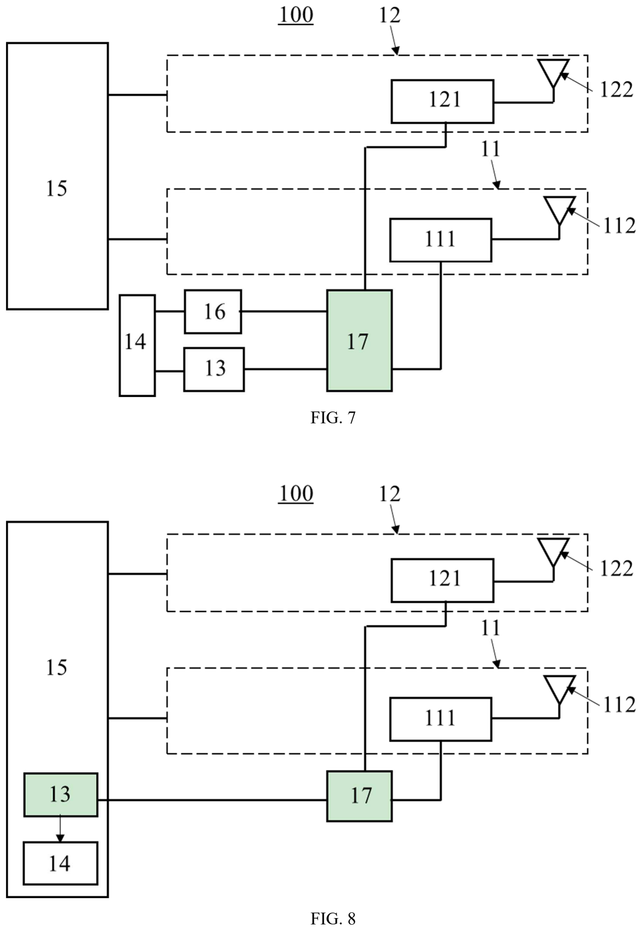

In some implementations, as illustrated in FIG. 7, the RF system 100 further includes a first switch unit 17.

A first side of the first switch unit 17 is electrically connected with each of the first power detector 13 and the second power detector 16. A second side of the first switch unit 17 is electrically connected with each of the first coupler 111 and the second coupler 121.

In some implementations, the first switch unit 17 includes a first terminal, a second terminal, a third terminal, and a fourth terminal. The first terminal and the second terminal may be signal input terminals, and the third terminal and the fourth terminal may be signal output terminals.

The first terminal of the first switch unit 17 is electrically connected with the first coupler 111, and the second terminal of the first switch unit 17 is electrically connected with the second coupler 121. The third terminal of the first switch unit 17 is electrically connected with the first power detector 13, and the fourth terminal of the first switch unit 17 is electrically connected with the second power detector 16.

When the impedance mismatch detection is performed on the first RF path 11, the first terminal and the third terminal of the first switch unit 17 are electrically connected, the first coupler 111 and the first power detector 13 are thus electrically connected, and the first power detector 13 detects, through the first coupler 111, the first coupled power of the antenna signal transmitted by the second antenna radiator 122 and received on the first RF path 11.

Further, in some implementations, the second terminal and the fourth terminal of the first switch unit 17 are electrically connected, the second coupler 121 and the second power detector 16 are thus electrically connected, and in this case, the second power detector 16 may monitor the transmit power on the second RF path 12, etc.

Further, in some implementations, the second terminal and the fourth terminal of the first switch unit 17 are electrically connected, the second coupler 121 and the second power detector 16 are thus electrically connected, and in this case, the second power detector 16 may monitor whether the impedance of the second RF path 12 is mismatched, etc.

In an optional implementation, as illustrated in FIG. 8, the first power detector 13 and the second power detector 16 are a same power detector, which is denoted as the first power detector 13.

That is, the third terminal and the fourth terminal of the first switch unit 17 are a same terminal, which is denoted as the third terminal.

When the impedance mismatch detection is performed on the first RF path 11, the first terminal and the third terminal of the first switch unit 17 are electrically connected, the first coupler 111 and the first power detector 13 are thus electrically connected, and the first power detector 13 detects, through the first coupler 111, the first coupled power of the antenna signal transmitted by the second antenna radiator 122 and received on the first RF path 11.

When the impedance mismatch detection is performed on the second RF path 12, the second terminal and the third terminal of the first switch unit 17 are electrically connected, the second coupler 121 and the first power detector 13 are thus electrically connected, and the first power detector 13 detects, through the second coupler 121, the second coupled power of the antenna signal transmitted by the first antenna radiator 112 and received on the second RF path 12.

In the embodiment, by setting one power detector and the first switch unit 17, the one power detector may monitor, in a time-sharing manner through the first switch unit 17, whether the impedance of the first RF path 11 is mismatched and whether the impedance of the second RF path 12 is mismatched. This reduces the number of devices, enables the detection of whether the impedance of the first RF path 11 and the second RF path 12 is mismatched, and reduces the cost and occupied area.

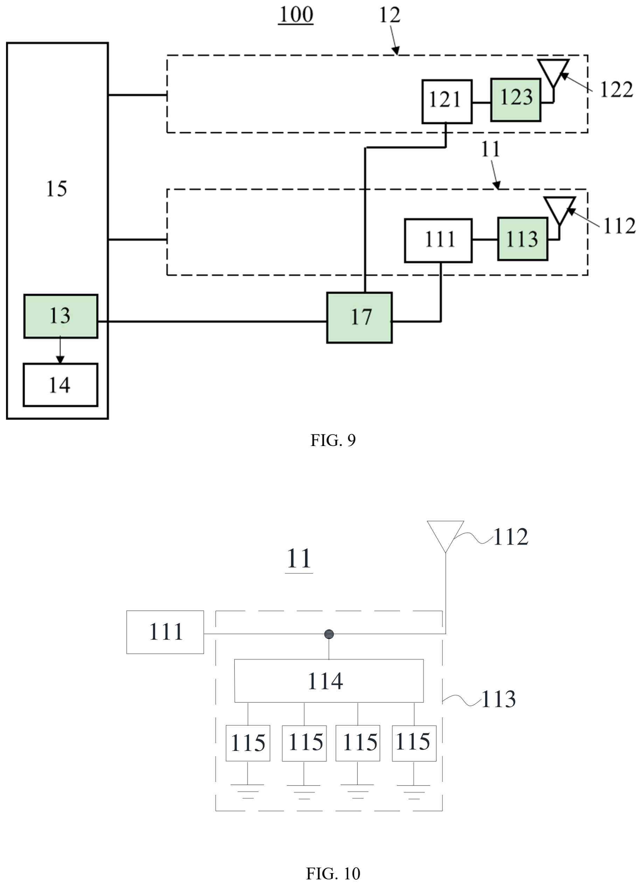

In some implementations, as illustrated in FIG. 9, the first RF path 11 further includes a first impedance tuning circuit 113.

As illustrated in FIG. 9, the first impedance tuning circuit 113 is electrically connected between the first antenna radiator 112 and the first coupler 111. Further, in some implementations, the first impedance tuning circuit 113 may be connected in series or in parallel between the first antenna radiator 112 and the first coupler 111.

The first impedance tuning circuit 113 is configured to receive the first impedance adjustment instruction. In some implementations, the processor 14 is electrically connected with the first impedance tuning circuit 113, and the first impedance tuning circuit 113 is configured to receive the first impedance adjustment instruction from the processor 14.

The first impedance adjustment instruction is used to make the impedance of the first impedance tuning circuit 113 tuned, so that the first voltage standing wave ratio falls within the preset standing wave ratio range. Thus, the impedance of the first RF path 11 and the impedance of the first antenna radiator 112 are made matched, which improves the efficiency of the first RF path 11 at the working frequency band.

In some implementations, as illustrated in FIG. 10, the first impedance tuning circuit 113 includes a first tuning switch 114 and multiple first tuning branches 115.

In some implementations, one terminal of the first tuning switch 114 is electrically connected with the first antenna radiator 112. Further, the one terminal of the first tuning switch 114 is electrically connected between the first antenna radiator 112 and the first coupler 111. Certainly, in some other implementations, the one terminal of the first tuning switch 114 may also be electrically connected with the radiating branch of the first antenna radiator 112.

The multiple first tuning branches 115 are electrically connected with multiple selection terminals of the first tuning switch 114 respectively. One terminal of each first tuning branch 115 is electrically connected with one selection terminal of the first tuning switch 114, and the other terminal of each first tuning branch 115 may be grounded or electrically connected between the first antenna radiator 112 and the first coupler 111.

The first tuning branch 115 includes but is not limited to an inductor, a capacitor, etc. The number of inductors on each first tuning branch 115 is not limited, and the number of capacitors on each first tuning branch 115 is not limited.

In some other implementations, there may be multiple first tuning switches 114. The multiple first tuning switches 114, multiple inductors, and multiple capacitors may form different first impedance tuning circuits 113, to perform different impedance tuning on the first RF path 11 under different impedance mismatch conditions.

As illustrated in FIG. 9, the second RF path 12 further includes a second impedance tuning circuit 123.

The second impedance tuning circuit 123 is electrically connected between the second antenna radiator 122 and the second coupler 121. Further, in some implementations, the second impedance tuning circuit 123 may be connected in series or in parallel between the second antenna radiator 122 and the second coupler 121.

The second impedance tuning circuit 123 is configured to receive the second impedance adjustment instruction. In some implementations, the processor 14 is electrically connected with the second impedance tuning circuit 123, and the second impedance tuning circuit 123 is configured to receive the second impedance adjustment instruction from the processor 14.

The second impedance adjustment instruction is used to make the impedance of the second impedance tuning circuit 123 tuned, so that the second voltage standing wave ratio falls within the preset standing wave ratio range. Thus, the impedance of the second RF path 12 and the impedance of the second antenna radiator 122 are made matched, which improves the efficiency the second RF path 12 at the working frequency band.

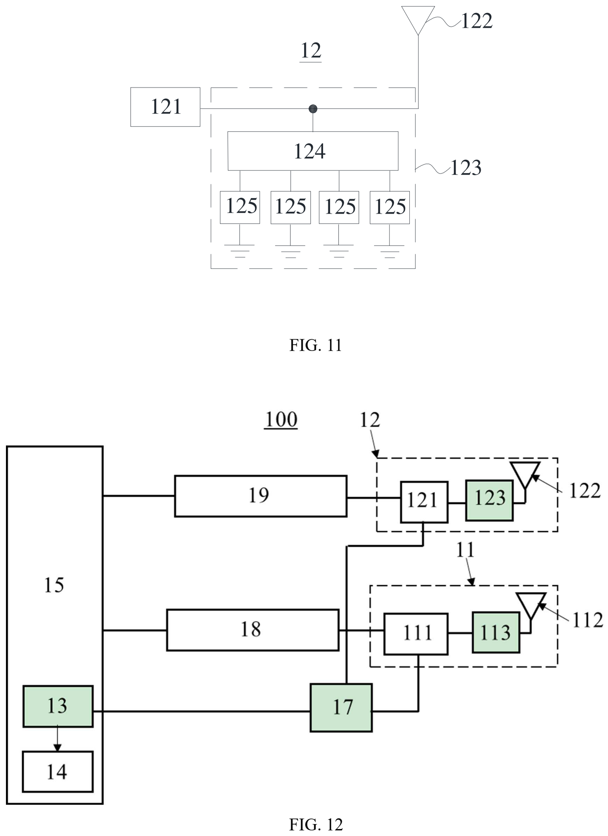

In some implementations, as illustrated in FIG. 11, the second impedance tuning circuit 123 includes a second tuning switch 124 and multiple second tuning branches 125.

In some implementations, one terminal of the second tuning switch 124 is electrically connected with the second antenna radiator 122. Further, the one terminal of the second tuning switch 124 is electrically connected between the second antenna radiator 122 and the second coupler 121. Certainly, in some other implementations, the one terminal of the second tuning switch 124 may also be electrically connected with the radiating branch of the second antenna radiator 122.

The multiple second tuning branches 125 are electrically connected with multiple selection terminals of the second tuning switch 124 respectively. One terminal of each second tuning branch 125 is electrically connected with one selection terminal of the second tuning switch 124, and the other terminal of each second tuning branch 125 may be grounded or electrically connected between the second antenna radiator 122 and the second coupler 121.

The second tuning branch 125 includes but is not limited to an inductor, a capacitor, etc. The number of inductors on each second tuning branch 125 is not limited, and the number of capacitors on each second tuning branch 125 is not limited.

In some other implementations, there may be multiple second tuning switches 124. The multiple second tuning switches 124, multiple inductors, and multiple capacitors may form different second impedance tuning circuits 123, to perform different impedance tuning on the second RF path 12 under different impedance mismatch conditions.

As illustrated in FIG. 12, the RF system 100 further includes the RF transceiver module 15, a first front-end circuit 18, and a second front-end circuit 19.

The RF transceiver module 15 is configured to transmit and receive antenna signals.

One terminal of the first front-end circuit 18 is electrically connected with the RF transceiver module 15, and the other terminal of the first front-end circuit 18 is electrically connected with the first coupler 111.

One terminal of the second front-end circuit 19 is electrically connected with the RF transceiver module 15, and the other terminal of the second front-end circuit 19 is electrically connected with the second coupler 121.

In some implementations, the first front-end circuit 18 and the second front-end circuit 19 are electrically connected with different ports of the RF transceiver module 15 respectively.

In some implementations, the second front-end circuit 19 includes a transmitting path and a receiving path, and the first front-end circuit 18 includes a receiving path.

In some other implementations, the second front-end circuit 19 includes a receiving path, and the first front-end circuit 18 includes a transmitting path and a receiving path. In some other implementations, the first front-end circuit 18 includes a transmitting path and a receiving path, and the second front-end circuit 19 includes a transmitting path and a receiving path.

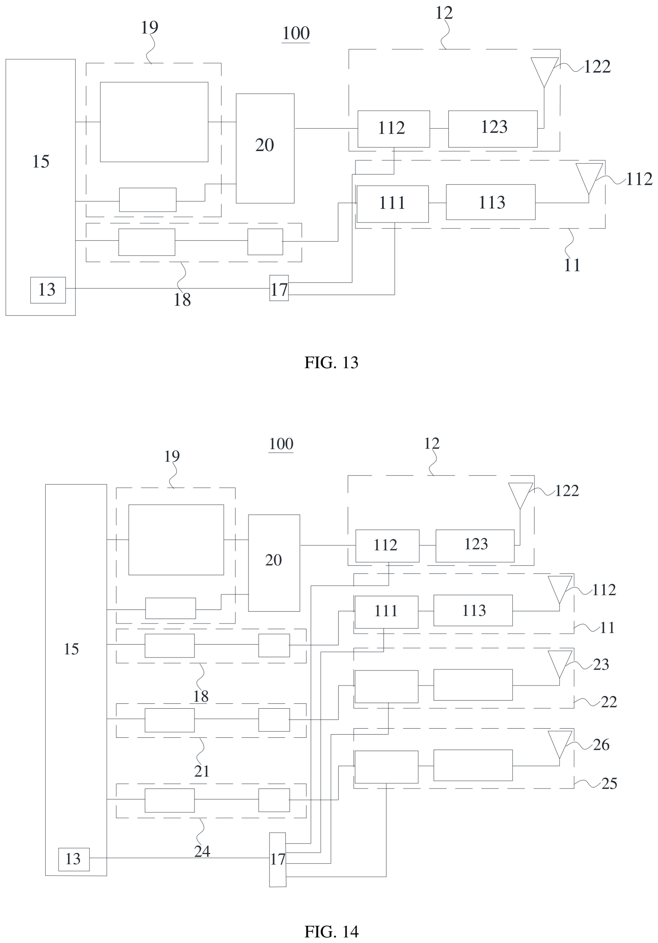

Specifically, as illustrated in FIG. 13, the RF transceiver module 15 includes a first port, a second port, and a third port. The RF system 100 further includes a first sub-switch 20.

One terminal of the transmitting path of the second front-end circuit 19 is electrically connected with the first port, and the other terminal of the transmitting path of the second front-end circuit 19 is electrically connected with a first terminal of the first sub-switch 20. One terminal of the receiving path of the second front-end circuit 19 is electrically connected with the second port, and the other terminal of the receiving path of the second front-end circuit 19 is electrically connected with a second terminal of the first sub-switch 20. A third terminal of the first sub-switch 20 is electrically connected with the second coupler 121.

When the first terminal of the first sub-switch 20 is switched to being electrically connected with the third terminal of the first sub-switch 20, the transmitting path of the second front-end circuit 19 is switched on. When the second terminal of the first sub-switch 20 is switched to being electrically connected with the third terminal of the first sub-switch 20, the receiving path of the second front-end circuit 19 is switched on.

In the implementations, the first front-end circuit 18 and the second front-end circuit 19 include one transmitting path and two receiving paths, which can form a 2*2 MIMO antenna array, this can increase throughput and increase the download speed, etc.

In some other implementations, as illustrated in FIG. 14, the RF system 100 further includes a third front-end circuit 21, a third RF path 22, and a third antenna radiator 23, and the third front-end circuit 21 includes a receiving channel. The RF transceiver module 15, the third front-end circuit 21, the third RF path 22, and the third antenna radiator 23 are connected in sequence. In this case, one transmitting path and three receiving paths are formed.

In some other implementations, as illustrated in FIG. 14, the RF system 100 further includes a fourth front-end circuit 24, a fourth RF path 25, and a fourth antenna radiator 26, and the fourth front-end circuit 24 includes a receiving channel. The RF transceiver module 15, the fourth front-end circuit 24, the fourth RF path 25, and the fourth antenna radiator 26 are connected in sequence. In this case, one transmitting path and four receiving paths are formed. This can form a 4*4 MIMO antenna array, and thus can increase throughput and increase the download speed, etc.

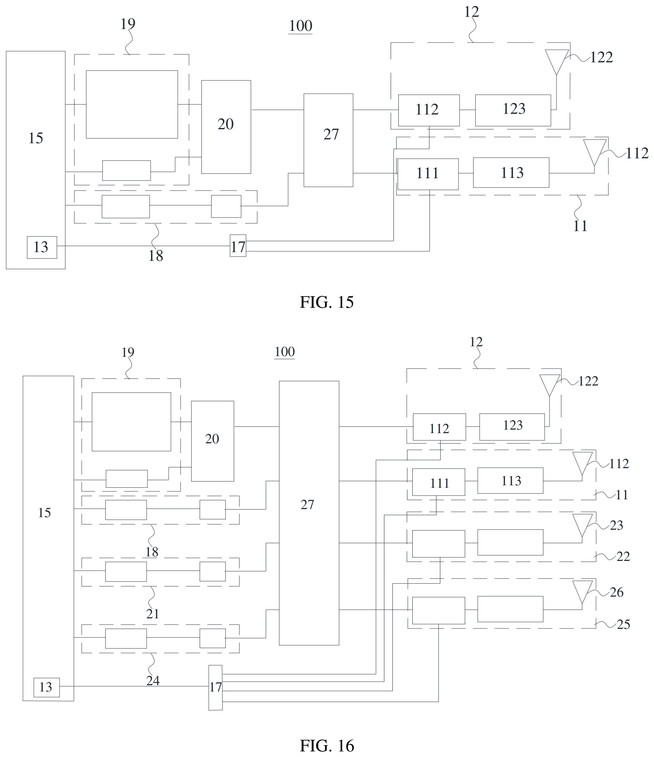

In some implementations, as illustrated in FIG. 15, the RF system 100 further includes a second switch unit 27.

A terminal at a first side of the second switch unit 27 is selectively electrically connected with the first front-end circuit 18 or the second front-end circuit 19. A terminal at a second side of the second switch unit 27 is selectively electrically connected with the first RF path 11 or the second RF path 12.

In some implementations, the second switch unit 27 includes but is not limited to a two-input two-output switch. The second switch unit 27 may be switched to make the first front-end circuit 18 and the first RF path 11 electrically connected. Alternatively, the second switch unit 27 may be switched to make the second front-end circuit 19 and the second RF path 12 electrically connected. Alternatively, the second switch unit 27 may be switched to make the first front-end circuit 18 and the second RF path 12 electrically connected. Alternatively, the second switch unit 27 may be switched to make the second front-end circuit 19 and the first RF path 11 electrically connected.

In some implementations, the second switch unit 27 may be switched to make the first front-end circuit 18 and the first RF path 11 electrically connected, and make the second front-end circuit 19 and the second RF path 12 electrically connected. Alternatively, the second switch unit 27 may be switched to make the first front-end circuit 18 and the second RF path 12 electrically connected, and make the second front-end circuit 19 and the first RF path 11 electrically connected.

Thus, the first antenna radiator 112 may serve as a transmitting and receiving antenna, or a receiving antenna. The second antenna radiator 122 may serve as a transmitting and receiving antenna, or a receiving antenna. Since the first antenna radiator 112 and the second antenna radiator 122 are located at different positions of the electronic device, the second switch unit 27 may be switched to different antenna radiators for signal transmission, or to different antenna radiators for signal reception, so as to ensure signal strength and communication quality.

When the second switch unit 27 is switched to make the first front-end circuit 18 and the first RF path 11 electrically connected, and make the second front-end circuit 19 and the second RF path 12 electrically connected, the second antenna radiator 122 can transmit an antenna signal, and the impedance mismatch monitoring on the first RF path 11 may obtain, through the first coupler 111, the coupled signal transmitted from the second antenna radiator 122 and received on the first RF path 11.

When the second switch unit 27 is switched to make the first front-end circuit 18 and the second RF path 12 electrically connected, and make the second front-end circuit 19 and the first RF path 11 electrically connected, the first antenna radiator 112 can transmit an antenna signal, and the impedance mismatch monitoring on the second RF path 12 may obtain, through the second coupler 121, the coupled signal transmitted from the first antenna radiator 112 and received on the second RF path 12.

As illustrated in FIG. 16, for the implementation where the RF system 100 further includes the third front-end circuit 21, the third RF path 22, the third antenna radiator 23, the fourth front-end circuit 24, the fourth RF path 25, and the fourth antenna radiator 26, the second switch unit 27 includes but is not limited to a four-input four-output switch. The second switch unit 27 may be switched to make the first front-end circuit 18 and any one of the first RF path 11 to the fourth RF path 25 electrically connected. The second switch unit 27 may be switched to make the second front-end circuit 19 and any one of the first RF path 11 to the fourth RF path 25 electrically connected. The second switch unit 27 may be switched to make the third front-end circuit 21 and any one of the first RF path 11 to the fourth RF path 25 electrically connected. The second switch unit 27 may be switched to make the fourth front-end circuit 24 and any one of the first RF path 11 to the fourth RF path 25 electrically connected.

Thus, the first antenna radiator 112 may serve as a transmitting and receiving antenna, or a receiving antenna. The second antenna radiator 122 may serve as a transmitting and receiving antenna, or a receiving antenna. The third antenna radiator 23 may serve as a transmitting and receiving antenna, or a receiving antenna. The fourth antenna radiator 26 may serve as a transmitting and receiving antenna, or a receiving antenna.

Since the first antenna radiator 112, the second antenna radiator 122, the third antenna radiator 23, and the fourth antenna radiator 26 are located at different positions (such as different sides) of the electronic device, the second switch unit 27 may be switched to antenna radiators at different positions (such as different sides) for signal transmission, or to antenna radiators at different positions (such as different sides) for signal reception, so as to ensure signal strength and communication quality.

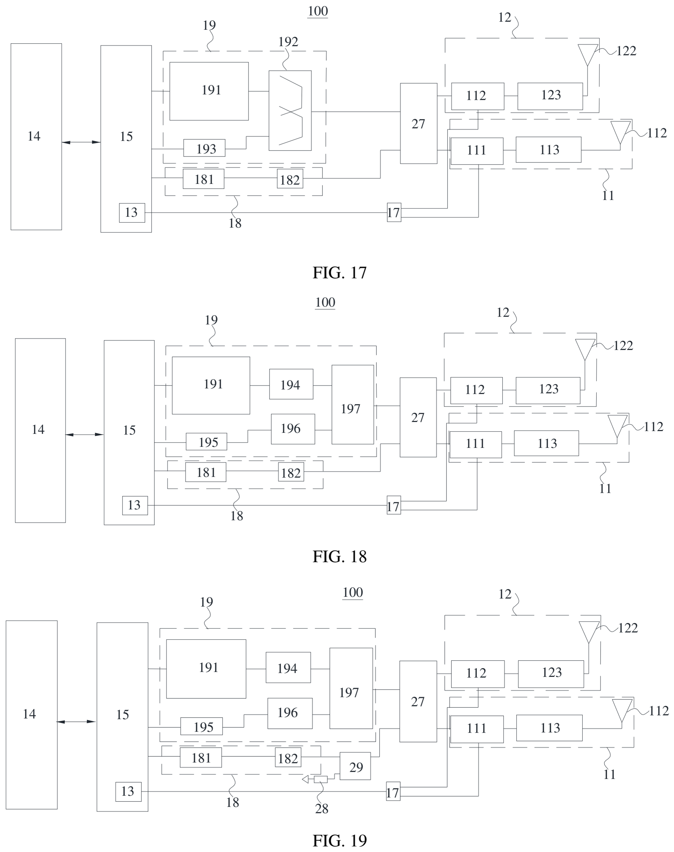

In some implementations, as illustrated in FIG. 17, the receiving channel of the first front-end circuit 18 includes a first low-noise amplifier 181 and a first filter 182. In some implementations, there may be multiple first filters 182. Further, the first front-end circuit 18 further includes a first frequency selection switch electrically connected with the multiple first filters 182 to select the frequency band of the received signal.

One terminal of the first low-noise amplifier 181 is electrically connected with the RF transceiver module 15. The other terminal of the first low-noise amplifier 181 is electrically connected with one terminal of the first filter 182. The other terminal of the first filter 182 is electrically connected with the second switch unit 27.

When the second switch unit 27 makes the first filter 182 switched on, the receiving channel of the first front-end circuit 18 receives antenna signals.

In some implementations, as illustrated in FIG. 17, the transmitted signal of the RF system 100 is in a frequency division duplex (FDD) standard. The transmitting channel of the second front-end circuit 19 includes a power amplifier 191, a duplexer 192, and a second filter 193.

One terminal of the power amplifier 191 is electrically connected with the RF transceiver module 15, and the other terminal of the power amplifier 191 is electrically connected with a first terminal of the duplexer 192. One terminal of the second filter 193 is electrically connected with the RF transceiver module 15. The other terminal of the second filter 193 is electrically connected with a second terminal of the duplexer 192. A third terminal of the duplexer 192 is electrically connected with the second switch unit 27.

When the second switch unit 27 makes the third terminal of the duplexer 192 electrically connected, the transmitting channel of the second front-end circuit 19 transmits antenna signals.

There may be multiple second filters 193. The multiple second filters 193 and a second frequency selection switch are electrically connected, to determine a frequency band to be transmitted among multiple frequency bands.

In some implementations, as illustrated in FIG. 18, the transmitted signal of the RF system 100 is in a time division duplex (TDD) standard. The second front-end circuit 19 includes a power amplifier 191, a fourth filter 194, a second low-noise amplifier 195, a third filter 196, and a switch module 197. One terminal of the power amplifier 191 is electrically connected with the RF transceiver module 15. The other terminal of the power amplifier 191 is electrically connected with a first terminal of the fourth filter 194. A second terminal of the fourth filter 194 is electrically connected with a first terminal of the switch module 197. A second terminal of the switch module 197 is electrically connected with the second switch unit 27. One terminal of the second low-noise amplifier 195 is electrically connected with the RF transceiver module 15, the other terminal of the second low-noise amplifier 195 is electrically connected with a first terminal of the third filter 196, and a second terminal of the third filter 196 is electrically connected with a third terminal of the switch module 197.

When the second terminal of the switch module 197 is electrically connected with the first terminal of the switch module 197, the transmitting channel of the second front-end circuit 19 is switched on. When the third terminal of the switch module 197 is electrically connected with the second terminal of the switch module 197, the receiving channel of the second front-end circuit 19 is switched on.

In some implementations, there may be multiple third filters 196. Further, the second front-end circuit 19 further includes a second frequency selection switch electrically connected with the multiple third filters 196, to select the frequency band of the received signal.

When the second switch unit 27 is electrically connected with the third filter 196, the receiving channel of the second front-end circuit 19 receives antenna signals.

There may be multiple fourth filters 194. The multiple fourth filters 194 and a third frequency selection switch are electrically connected, to determine a frequency band to be transmitted among multiple frequency bands.

In some implementations, as illustrated in FIG. 19, the RF system 100 further includes an impedance matching branch 28 and a third switch unit 29.

One terminal of the third switch unit 29 is electrically connected with the second switch unit 27. A first selection terminal of the third switch unit 29 is electrically connected with one terminal of the impedance matching branch 28, and the other terminal of the impedance matching branch 28 is grounded. A second selection terminal of the third switch unit 29 is electrically connected with the first front-end circuit 18. Specifically, when the first power detector 13 detects the first coupled power, the first RF path 11 and the impedance matching branch 28 are electrically connected.

The impedance matching branch 28 is a transmission line structure for impedance matching. For example, the impedance matching branch 28 is a resistor of 50 ohms. The impedance matching branch 28 may also be a circuit having small power reflection for a received antenna signal of a frequency band whose transmission impedance is close to 50 ohms.

The third switch unit 29 is used when the RF system 100 works in a frequency division duplex (FDD) communication mode. The transmitting frequency band and the receiving frequency band in the FDD communication mode are different frequency bands. For example, the transmitting frequency band of B3 is 1710 MHz to 1785 MHz, and the receiving frequency band of B3 is 1805 MHz to 1880 MHz. The third filter 196 in the second front-end circuit 19 is a filter that allows the transmitting frequency band of B3 to pass through. The first filter 182 in the first front-end circuit 18 is a filter that allows the receiving frequency band of B3 (1805 MHz to 1880 MHz) to pass through.

However, when it is detected whether there is impedance mismatch in the first RF path 11, the first RF path 11 receives the transmitted signal from the second front-end circuit 19, and the frequency band of the signal received by the first front-end circuit 18 is the transmitting frequency band of B3. The first filter 182 has a certain impedance (e.g., it is open circuited) for the transmitting frequency band of B3 (1710 MHz to 1785 MHz), which may make the signal at the transmitting frequency band of B3 totally reflected, leading to inaccurate first coupled power detected by the first power detector 13. In the implementations, it is designed that, when it is detected whether there is impedance mismatch in the first RF path 11, the third switch unit 29 switches on the impedance matching branch 28 which is grounded, and the impedance matching branch 28 has basically no reflection for the transmitting frequency band of B3 (1710 MHz to 1785 MHz), thereby improving the accuracy of the first coupled power detected by the first power detector 13.

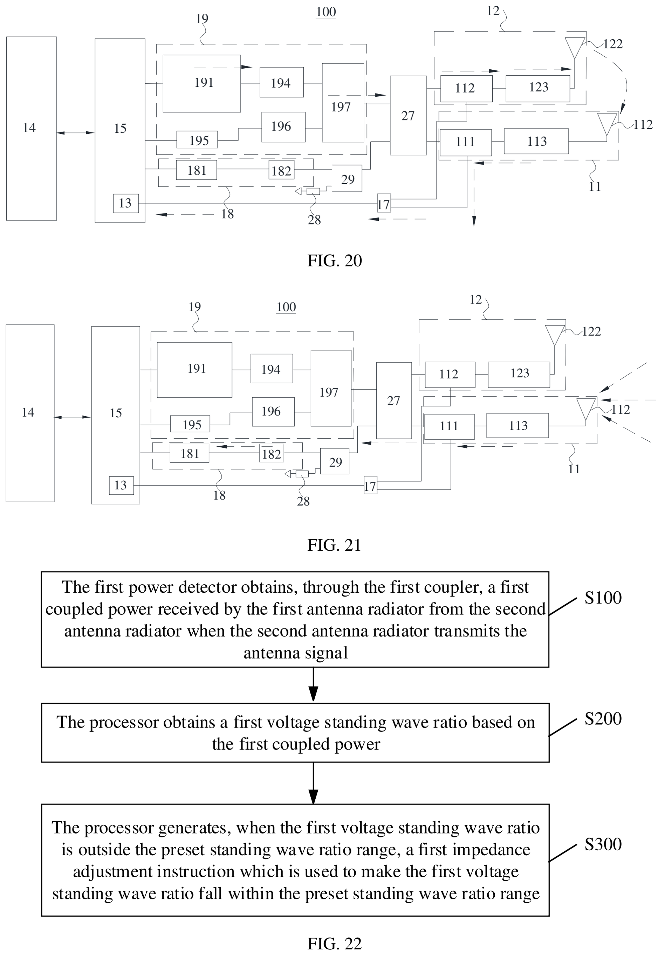

As illustrated in FIG. 20, the third switch unit 29 is configured to make the second switch unit 27 and the impedance matching branch 28 electrically connected, when the RF system 100 operates in the FDD communication mode and the first power detector 13 detects the first coupled power; as such, the first RF path 11 and the impedance matching branch 28 are electrically connected, to improve the accuracy of the detected voltage standing wave ratio of the first RF path 11.

As illustrated in FIG. 21, the third switch unit 29 is also configured to make the second switch unit 27 and the first front-end circuit 18 electrically connected, enabling the first front-end circuit 18 to receive antenna signals, thereby allowing the receiving channel of the first front-end circuit 18 to operate.

In some other implementations, the RF system 100 provided in the present disclosure may not be equipped with the third switch unit 29. Thus, the transmitting path and the receiving channel may be mutually decoupled.

In some implementations, the first power detector 13 may be part of the RF transceiver module 15. Alternatively, the first power detector 13 and the RF transceiver module 15 may be two independent modules.

Further, in some implementations, the processor 14 may be part of the RF transceiver module 15. Alternatively, the processor 14 and the RF transceiver module 15 may be two independent modules. For example, as illustrated in FIG. 19, the processor 14 may be a coprocessor (application processor, AP) of the electronic device 1000.

Further, in some implementations, the processor 14 and the first power detector 13 may be independent modules, or they may be integrated into a single module or chip.

In the process where the processor 14 determines the first voltage standing wave ratio, the first coupled power detected by the first power detector 13 is the power at the position of the first power detector 13. Since there is a certain amount of loss in the path between the first coupler 111 and the first power detector 13, and there is also a certain amount of loss in the power coupled out from the first RF path 11 through the first coupler 111, a target coupled power on the first RF path 11 may be determined based on the first coupled power, a coupling coefficient of the first coupler 111, and an insertion loss between the first power detector 13 and the first coupler 111.

When the first coupled power includes the forward coupled power detected by the first power detector 13 that is from the first antenna radiator 112 to the first coupler 111, and also includes the backward coupled power detected by the first power detector 13 that is from the first coupler 111 to the first antenna radiator 112 after reflection on the first RF path 11, the target coupled power includes a forward target coupled power received by the first coupler 111 from the first antenna radiator 112 and a backward target coupled power received by the first coupler 111 from the RF transceiver module.

Specifically, the processor 14 is configured to determine the target coupled power based on the first coupled power, the coupling coefficient of the first coupler 111, and the insertion loss between the first power detector 13 and the first coupler 111, and obtain the first voltage standing wave ratio based on the target coupled power.

The target coupled power is the power on the first RF path 11, which can more accurately reflect the impedance matching state of the first RF path 11.

Specifically, when the second antenna radiator 122 transmits an antenna signal of the first frequency band, the first antenna radiator 112 receives the antenna signal of the first frequency band through spatial coupling and transmits it to the first RF path 11 (this is the forward signal), and the signal reflected on the first RF path 11 forms the backward signal. The first coupler 111 may separate the forward power P10 and the backward power P20 of the signal at the first frequency band. The forward power refers to the power of the antenna signal of the first frequency band transmitted from the first antenna radiator 112 to the RF transceiver module 15. The backward power refers to the power of the antenna signal of the first frequency band after being reflected on the first RF path 11, with the reflected antenna signal transmitted from the RF transceiver module 15 to the first antenna radiator 112. The first power detector 13 detects the first coupled power P11 of the forward signal. The processor 14 determines a first power loss P12 on this path based on the coupling coefficient of the first coupler 111 and the insertion loss between the first power detector 13 and the first coupler 111, and then calculates the forward power P10 (i.e., the forward target coupled power) on the first RF path 11 based on the first coupled power P11 and the first power loss P12.

The first power detector 13 detects the second coupled power P21 of the backward signal. The processor 14 determines a second power loss P22 on this path based on the coupling coefficient of the first coupler 111 and the insertion loss between the first power detector 13 and the first coupler 111, and then calculates the backward power P20 (i.e., the backward target coupled power) on the first RF path 11 based on the second coupled power P21 and the second power loss P22.

The processor 14 performs calculation using a power reflection coefficient formula:

$$|\gamma| = P10/P20 \tag{1}$$

where $|\gamma|$ represents the modulus of the power reflection coefficient, P10 represents the forward power, and P20 represents the backward power.

The processor 14 then performs calculation using a voltage standing wave ratio (VSWR) formula:

$$VSWR=(1+|\gamma|)/(1-|\gamma|) \tag{2}$$

where VSWR represents the voltage standing wave ratio, and $|\gamma|$ represents the modulus of the power reflection coefficient.

The processor 14 calculates the first voltage standing wave ratio on the first RF path 11 using formula (2).

Further, the processor 14 determines, through comparison, whether the first voltage standing wave ratio is within the preset standing wave ratio range. If the first voltage standing wave ratio is outside the preset standing wave ratio range, it shows that there may be impedance mismatch, and the processor 14 generates the first impedance adjustment instruction, which instruction may control the impedance tuning circuit on the first RF path 11 to tune the impedance of the first RF path 11 until the first voltage standing wave ratio falls within the preset standing wave ratio range, thereby ensuring that the first RF path 11 has good operating efficiency.

The embodiments do not specifically limit the preset standing wave ratio range. In some implementations, an appropriate preset standing wave ratio range may be determined based on the efficiency of the working frequency band. A standing wave ratio threshold X may be determined according to the efficiency of the working frequency band of for example -7 dB (this is an example, and the present disclosure is not limited thereto). The preset standing wave ratio range may be 1 to X.

Similarly, the impedance matching state of the second RF path 12 may also be monitored in a similar way.

The present disclosure does not specifically limit the time and frequency at which the first power detector 13 detects the first coupled power.

In some implementations, the first power detector 13 is configured to obtain the first coupled power through the first coupler 111 in a first sub-slot of a transmission slot. The transmission slot refers to a time period during which the second RF path 12 transmits the antenna signal.

Specifically, the first power detector 13 performs detection in the time period during which the second RF path 12 transmits the antenna signal (i.e., the transmission slot). This is because the first RF path 11 can receive, through the first antenna radiator 112, an antenna signal transmitted by the second antenna radiator 122 when the second RF path 12 transmits the antenna signal through the second antenna radiator 122. In this case, the first power detector 13 can detect the first coupled power.

Further, as illustrated in FIG. 19, the first power detector 13 is configured to obtain the first coupled power through the first coupler 111 in a first time period. At this time, the third switch unit 29 makes the impedance matching branch 28 and the first RF path 11 electronically connected.

The first power detector 13 is further configured to receive antenna signals through the first coupler 111 in a second time period when the receiving channel of the first front-end circuit 18 is switched on. At this time, the third switch unit 29 makes the receiving channel of the first front-end circuit 18 and the first RF path 11 electronically connected.

The first time period and the second time period are different time periods, and the order of the first and second time periods is not limited.

In the implementations, during the first time period, the third switch unit 29 is switched to make the first RF path 11 and the impedance matching branch 28 (a resistor of 50 ohms) electronically connected, to detect the impedance matching state of the first RF path 11. During the second time period, the third switch unit 29 is switched to make the first RF path 11 and the receiving channel of the first front-end circuit 18 electronically connected, so that the first front-end circuit 18 performs signal reception through the first RF path 11, thereby forming a receiving antenna. In other words, although the above two operating modes of the second RF path 12 both use the first RF path 11 and the first power detector 13, they are independent of each other in terms of time and do not cause mutual interference.

In combination with the implementation where the first power detector 13 obtains the first coupled power through the first coupler 111 in the first sub-slot T11 of the transmission slot T1, the first sub-slot T11 is the first time period. The first sub-slot T11 is also a time period during which the first RF path 11 does not operate as a receiving antenna.

For example, the first front-end circuit 18, the first RF path 11, and the first antenna radiator 112 together form a receiving antenna, and the second front-end circuit 19, the second RF path 12, and the second antenna radiator 122 together form a transmitting and receiving antenna. The transmitting and receiving antenna transmits an antenna signal at the transmitting frequency band of B3 (1710 MHz to1785 MHz), and the transmission slot T1 includes a first sub-slot T11 and a second sub-slot T12. The order of the two sub-slots is not limited.

During the first sub-slot T11, the third switch unit 29 makes the first RF path 11 and the impedance matching branch 28 electrically connected, the first RF path 11 receives a transmitted signal at the transmitting frequency band of B3 (1710 MHz to 1785 MHz) through the first antenna radiator 112, and the first power detector 13 monitors the impedance matching state of the first RF path 11 and feeds the monitored result about the impedance matching state back to the processor 14 for impedance tuning of the first RF path 11.

During the second sub-slot T12, the third switch unit 29 makes the first RF path 11 and the first front-end circuit 18 electrically connected, and the first RF path 11 receives a signal at the receiving frequency band of B3 (1805 MHz to 1880 MHz) through the first antenna radiator 112.

If a RF path is configured for a transmitting antenna, the impedance matching state of the RF path may be monitored and fed back by sampling a transmitted antenna signal. For example, within the transmission slot T1 during which the mobile phone transmits power to the outside, the first power detector may collect, through the second coupler 121, the power amplitude and phase information of each of the forward RF signal and the backward RF signal in the second RF path 12, and then the sampled information is fed back to the RF transceiver module 15 for calculation and processing such as signal amplification, down-conversion, and analog-to-digital conversion (ADC), thereby obtaining the power reflection coefficient S11 at the position of the second coupler 121, i.e., obtaining the impedance information at that position indirectly. Thereafter, the modem or the RF transceiver module 15 issues an instruction to control the second impedance tuning circuit 123 to adjust the internal matching network and optimize the front-end matching, thereby achieving a good impedance matching state at the position of the second coupler 121.

However, when a RF path is configured for a receiving antenna, the first RF path 11 is electrically connected with the first front-end circuit 18. Since the first front-end circuit 18 does not have a transmitting channel, there is no transmitted signal in the first RF path 11. Therefore, the condition of obtaining impedance information at that position by sampling the power amplitude and phase information of each of the forward RF signal and backward RF signal of the transmitted signal cannot be satisfied, and thus the power-related information cannot be detected, making it impossible to calculate the impedance mismatch situation at the antenna for impedance tuning.

For example, when a terminal such as a mobile phone actually operates, due to its support for the switching of the transmitting antenna path, there may be cases where the signal is transmitted through the second antenna radiator 122 or the first antenna radiator 112. When the signal radiation (transmitting) operation is performed through the second antenna radiator 122, the first antenna radiator 112 is configured as a receiving antenna, and no signal is transmitted by in the first antenna radiator 112. In this case, the condition of obtaining impedance information at that position by sampling the power amplitude and phase information of each of the forward RF signal and backward RF signal of the transmitted signal cannot be satisfied, and thus the power-related information cannot be detected, making it impossible to calculate the impedance mismatch situation at the antenna terminal for impedance tuning. However, the impedance mismatch of the receiving antenna would lead to imbalance between the receiving antennas, which cause a decrease in the signal-to-noise ratio and channel quality in the medium and strong field communication scenarios. Taking the electronic device as a mobile phone as an example, when the antenna of the mobile phone is held by hand or affected by the surrounding environment, mismatch may occur. Severe mismatch would greatly affect the total radiated power and total isotropic sensitivity performance of the antenna, thereby affecting the communication quality of the mobile phone.

The RF system 100 provided by the embodiments can effectively detect and adjust the impedance matching state of the receiving antenna. The RF transceiver module 15 is connected with one side of the second switch unit 27 through the second front-end circuit 19 and the first front-end circuit 18. The second front-end circuit 19 includes a receiving channel, a transmitting channel, an antenna switch and other components. The other side of the second switch unit 27 is electrically connected with the first RF path 11 and the second RF path 12. The first RF path 11 includes the first coupler 111, the first impedance tuning circuit 113, and the first antenna radiator 112. The second RF path 12 includes the second coupler 121, the second impedance tuning circuit 123, and the second antenna radiator 122.

One terminal of the first power detector 13 is electrically connected with the first coupler 111 through the first switch unit 17, and another terminal of the first power detector 13 is electrically connected with the second coupler 121 through the first switch unit 17. The first power detector 13 is also electrically connected with the processor 14. Both the first coupler 111 and the second coupler 121 are bidirectional couplers.

Further, the third switch unit 29 is provided between the second switch unit 27 and the first front-end circuit 18. The selection terminal of the third switch unit 29 may be switched to be electrically connected with the first front-end circuit 18 or the impedance matching branch 28. The impedance matching branch 28 is a 50-ohm grounded circuit.

When the signal radiation operation is performed on one of the antennas, the receiving antenna can perform voltage standing wave ratio mismatch measurement through spatial power coupling, and perform tuning therefor.

Taking a case where the signal radiation operation is performed on the second antenna radiator 122 as an example, assuming that the transmit power at the antenna port is P0 and the degree of isolation between the first antenna radiator 112 and the second antenna radiator 122 is ISO, the power of the transmitted signal received by the receiving antenna (the first antenna radiator 112) is P0-ISO. This indicates that, when the second antenna radiator 122 transmits a signal, the first antenna radiator 112 can receive the signal transmitted by the second antenna radiator 122.

The forward power and backward power in the first RF path 11 are detected through the first coupler 111 and the first power detection circuit. Based on the first coupled power measured by the first power detection circuit, the known coupling coefficient of the first coupler 111, and the insertion loss of the first power detection circuit, the forward power P10 and the backward power P20 at the position of the first coupler 111 are calculated. Then, the modulus of the power reflection coefficient $|\gamma|$ at the position of the first coupler 111 is calculated as $|\gamma|=P10/P20$, and the first voltage standing wave ratio (VSWR) of the first RF path 11 is calculated as "first VSWR = $(1+|\gamma|)/(1-|\gamma|)$". Then, when the first voltage standing wave ratio is outside the preset standing wave ratio range, an instruction is issued through the modem or the RF transceiver module 15 to adjust the impedance of the first impedance tuning circuit 113, so that the first voltage standing wave ratio falls within the preset standing wave ratio range, thereby completing the impedance tuning of the receiving path. It is notable that, during the power measurement, the third switch unit 29 needs to be switched to make the impedance matching branch 28 switched on (50-ohm matching state), otherwise, large reflections would be caused for signals in the frequency division duplex (FDD) mode, which affects the accuracy of signal measurement.

In addition, the first power detector 13 is not only configured to detect the impedance matching state of the first RF path 11, but also configured to monitor the transmit power when the second RF path 12 transmits the antenna signal(s). To avoid detection conflicts of the first power detector 13, the time period during which the impedance matching state of the first RF path 11 is detected may be different from the time period during which the transmit power is monitored while the second RF path 12 transmits antenna signals.

The RF system 100 provided in the present disclosure not only supports the impedance tuning of the transmitting path, but also can perform impedance tuning on the antenna path that is not in the transmitting state and is only configured for receiving. This significantly improve the Over-The-Air (OTA) performance of the receiving antenna after mismatch is caused due to holding by hand or other situations, and improve the user's communication experience. The RF system 100 provided in the present disclosure breaks, through signal coupling, the limitation that the impedance tuning needs to be bounded up with the transmitting path, realizes the impedance tuning of the receiving antenna path, and alleviates the problem of antenna performance degradation resulted from the impedance mismatch of the receiving antenna caused due to being held by hand or other factors.

The first power detector 13 and the processor 14 may be independent modules from the RF transceiver module 15. In this way, the processor 14 may independently generate the impedance tuning instruction and send it to the first impedance tuning circuit 113, without relying on the RF transceiver module 15 or modifying the structure of the RF transceiver module 15. It may be directly deployed on the periphery of the RF transceiver module 15, to achieve decoupling from the RF control platforms such as the RF transceiver module 15.

As illustrated in FIG. 22, a second embodiment of the present disclosure further provides an impedance tuning method. The method is applied to/implemented by the RF system 100 described in any of the above implementations.

In conjunction with FIG. 3 to FIG. 6, the RF system 100 includes a first RF path 11, a second RF path 12, a first power detector 13, and a processor 14. For the first RF path 11 provided in the second embodiment, reference may be made to the relevant content of the first RF path 11 in the first embodiment. For the second RF path 12 in the second embodiment, reference may be made to the relevant content of the second RF path 12 in the first embodiment. For the first power detector 13 provided in the second embodiment, reference may be made to the relevant content of the first power detector 13 in the first embodiment. For the processor 14 provided in the second embodiment, reference may be made to the relevant content of the processor 14 in the first embodiment.

The first RF path 11 includes a first coupler 111 and a first antenna radiator 112. For the first coupler 111 provided in the second embodiment, reference may be made to the relevant content of the first coupler 111 in the first embodiment. For the first antenna radiator 112 provided in the second embodiment, reference may be made to the relevant content of the first antenna radiator 112 in the first embodiment.

The second RF path 12 includes a second antenna radiator 122. For the second antenna radiator 122 provided in the second embodiment, reference may be made to the relevant content of the second antenna radiator 122 in the first embodiment.

When the second antenna radiator 122 transmits an antenna signal, the first antenna radiator 112 can receive a coupled signal from the second antenna radiator 122. The first power detector 13 is electrically connected with the first coupler 111.

As illustrated in FIG. 22, the method includes but is not limited to the operations S100 to S300 as follows.

S 100, the first power detector 13 obtains, through the first coupler 111, a first coupled power received by the first antenna radiator 112 from the second antenna radiator 122 when the second antenna radiator 122 transmits the antenna signal.

In some implementations, the first power detector 13 may be an independent module from the RF transceiver module 15, or it may be integrated into the RF transceiver module 15.

In some implementations, the first coupler 111 includes but is not limited to a bidirectional coupler.

Since the first antenna radiator 112 and the second antenna radiator 122 meet the coupling conditions, when the second antenna radiator 122 serves as a transmitting antenna for a first frequency band and the first antenna radiator 112 serves as a receiving antenna, the first antenna radiator 112 can receive the signal of the first frequency band through spatial coupling, and the first coupler 111 transmits the signal of the first frequency band toward the RF transceiver module 15. The first power detector 13 may monitor the power of the signal of the first frequency band signal transmitted by the first coupler 111, and then obtain the first coupled power.

S200, the processor 14 obtains a first voltage standing wave ratio based on the first coupled power.

The voltage standing wave ratio refers to the ratio of the voltage amplitude at the peak to the voltage amplitude at the trough of the standing wave in a transmission line (the first RF path 11 in this embodiment). It is also referred to as a standing wave coefficient or standing wave ratio. When the standing wave ratio is equal to 1, it shows that the impedance of the feeder line and the impedance of the antenna are completely matched; and in this case, all high-frequency energy is radiated by the antenna without reflection loss of energy. When the standing wave ratio is infinite, it shows that there is total reflection, and no energy is radiated.

The processor 14 may obtain the first voltage standing wave ratio, based on the forward power and backward power of the first RF path 11 detected by the first power detector 13.

S300, the processor 14 generates a first impedance adjustment instruction when the first voltage standing wave ratio is outside the preset standing wave ratio range, and the first impedance adjustment instruction is used to make the first voltage standing wave ratio fall within the preset standing wave ratio range.

In some implementations, the processor 14 may an independent module from the RF transceiver module 15, including but is not limited to a Microcontroller Unit (MCU). The processor 14 may also be integrated into the RF transceiver module 15.

If the first voltage standing wave ratio is outside the preset standing wave ratio range, it shows that there may be impedance mismatch, and the processor 14 generates the first impedance adjustment instruction, where first impedance adjustment instruction may control the impedance tuning circuit on the first RF path 11 to tune the impedance of the first RF path 11 until the first voltage standing wave ratio falls within the preset standing wave ratio range, so that the first RF path 11 has good operating efficiency.

In the impedance tuning method provided in the present disclosure, the first power detector 13 obtains, through the first coupler 111, the first coupled power received by the first antenna radiator 112 from the second antenna radiator 122 when the second antenna radiator 122 transmits an antenna signal. The processor 14 obtains the first voltage standing wave ratio based on the first coupled power, and generates the impedance adjustment instruction when the first voltage standing wave ratio is outside the preset standing wave ratio range, the impedance adjustment instruction is used to make the first voltage standing wave ratio fall within the preset standing wave ratio range. In this way, it enables tuning for the antenna impedance matching, and avoids impedance mismatch.

In some implementations, in conjunction with FIG. 9, the first RF path 11 further includes a first impedance tuning circuit 113, and the first impedance tuning circuit 113 is electrically connected between the first antenna radiator 112 and the first coupler 111.

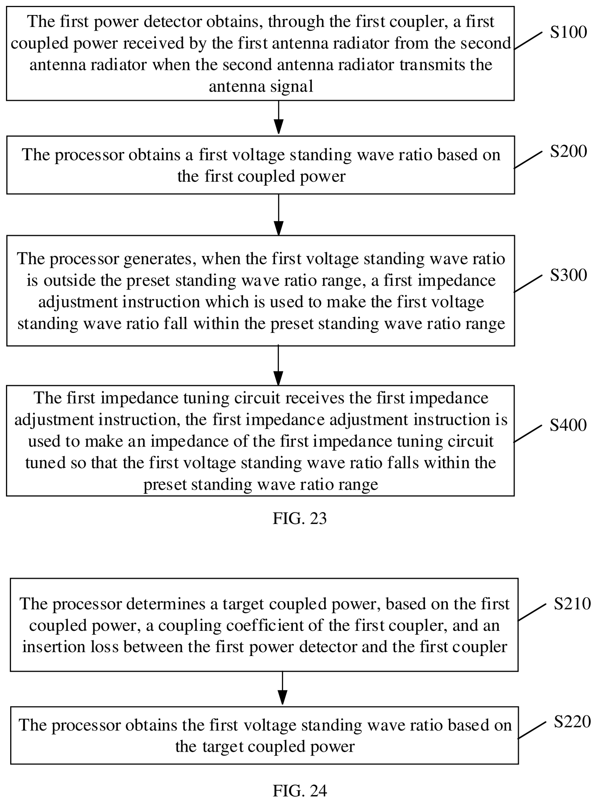

As illustrated in FIG. 23, after the operation S300 that the processor 14 generates the first impedance adjustment instruction when the first voltage standing wave ratio is outside the preset standing wave ratio range, the method further includes:

S400, the first impedance tuning circuit 113 receives the first impedance adjustment instruction, the first impedance adjustment instruction is used to make the impedance of the first impedance tuning circuit 113 tuned so that the first voltage standing wave ratio falls within the preset standing wave ratio range.

Specifically, the first impedance tuning circuit 113 may be connected in series or in parallel between the first antenna radiator 112 and the first coupler 111. The processor 14 is electrically connected with the first impedance tuning circuit 113, and the first impedance tuning circuit 113 receives the first impedance adjustment instruction from the processor 14.

The first impedance adjustment instruction is used to make the impedance of the first impedance tuning circuit 113 tuned so that the first voltage standing wave ratio falls within the preset standing wave ratio range. Thus, the impedance of the first RF path 11 and the impedance of the first antenna radiator 112 are matched, which improves the efficiency of the first RF path 11 at the working frequency band.

In some implementations, in conjunction with FIG. 10, the first impedance tuning circuit 113 includes the first tuning switch 114 and multiple first tuning branches 115.

In some implementations, one terminal of the first tuning switch 114 is electrically connected with the first antenna radiator 112. Further, the one terminal of the first tuning switch 114 may be electrically connected between the first antenna radiator 112 and the first coupler 111. Certainly, in some other implementations, the one terminal of the first tuning switch 114 may also be electrically connected with the radiating branch of the first antenna radiator 112.

The multiple first tuning branches 115 are electrically connected with the multiple selection terminals of the first tuning switch 114 respectively. One terminal of each first tuning branch 115 is electrically connected with one selection terminal of the first tuning switch 114, and the other terminal of each first tuning branch 115 may be grounded or electrically connected between the first antenna radiator 112 and the first coupler 111.

The first tuning branch 115 includes but is not limited to components such as inductors and capacitors. The number of inductors on each tuning branch is not limited, and the number of capacitors on each tuning branch is not limited.

In some implementations, the processor 14 is electrically connected with the first tuning switch 114. The processor 14 sends the first impedance adjustment instruction to the first tuning switch 114, so that the first tuning switch 114 makes the first tuning branch 115 electrically connected with the first antenna radiator 112 switched, thereby tuning the impedance of the first impedance tuning circuit 113 and realizing the impedance matching of the first RF path 11.

In some other implementations, there may be multiple first tuning switches 114. The multiple first tuning switches 114, multiple inductors and multiple capacitors may form different first impedance tuning circuits 113, to perform different tuning on the first RF path 11 for different impedance mismatch situations.

As illustrated in FIG. 24, the operation S200 that the processor 14 obtains the first voltage standing wave ratio based on the first coupled power includes but is not limited to operations S210 and S220 as follows.

S210, the processor 14 determines a target coupled power, based on the first coupled power, a coupling coefficient of the first coupler 111, and an insertion loss between the first power detector 13 and the first coupler 111.

The first coupled power includes the coupled power of forward wave and the coupled power of backward wave.

The target coupled power includes the target coupled power of the forward wave and the target coupled power of the backward wave.

In the process where the processor 14 determines the first voltage standing wave ratio, the first coupled power detected by the first power detector 13 is the power at the position of the first power detector 13. Since there is a certain amount of loss in the path between the first coupler 111 and the first power detector 13, and there is also a certain amount of loss in the power coupled out from the first RF path 11 through the first coupler 111, the target coupled power on the first RF path 11 may be determined based on the first coupled power, the coupling coefficient of the first coupler 111, and the insertion loss between the first power detector 13 and the first coupler 111.

The target coupled power is the power on the first RF path 11, which can more accurately reflect the impedance matching state of the first RF path 11.

Specifically, when the second antenna radiator 122 transmits an antenna signal of the first frequency band, the first antenna radiator 112 receives the antenna signal of the first frequency band through spatial coupling and transmits it to the first RF path 11. The first coupler 111 may separate the forward power P10 and the backward power P20 of the signal of the first frequency band. The forward power refers to the power of the antenna signal of the first frequency band transmitted from the first antenna radiator 112 to the RF transceiver module 15. The backward power refers to the power of the antenna signal of the first frequency band after being reflected on the first RF path 11, with the reflected antenna signal transmitted from the RF transceiver module 15 to the first antenna radiator 112. The first power detector 13 detects the first coupled power P11 of the forward signal. The processor 14 determines the first power loss P12 on this path based on the coupling coefficient of the first coupler 111 and the insertion loss between the first power detector 13 and the first coupler 111. The processor 14 obtains the forward power P10 (i.e., the target coupled power of the forward wave) on the first RF path 11, based on the first coupled power P11 and the first power loss P12.

The first power detector 13 detects the first coupled power P21 of the backward signal, the processor 14 determines the second power loss P22 on this path based on the coupling coefficient of the first coupler 111 and the insertion loss between the first power detector 13 and the first coupler 111, and then calculates the backward power P20 (i.e., the target coupled power of the backward wave) on the first RF path 11, based on the first coupled power P21 and the second power loss P22.

S220, the processor 14 obtains the first voltage standing wave ratio based on the target coupled power.

The processor 14 performs calculation using a power reflection coefficient formula: (1)

$$|\gamma| = P10/P20 \tag{1}$$

where $|\gamma|$ represents the modulus of the power reflection coefficient, P10 represents the forward power, and P20 represents the backward power.

The processor 14 then performs calculation using a voltage standing wave ratio (VSWR) formula:

$$VSWR = (1+|\gamma|)/(1-|\gamma|) \tag{2}$$

(2) where VSWR represents the voltage standing wave ratio, and $|\gamma|$ represents the modulus of the power reflection coefficient.

The processor 14 calculates the first voltage standing wave ratio on the first RF path 11 using formula (2).

Further, the processor 14 determines, through comparison, whether the first voltage standing wave ratio is within the preset standing wave ratio range. If the first voltage standing wave ratio is outside the preset standing wave ratio range, it shows that there may be impedance mismatch, and the processor 14 generates the first impedance adjustment instruction, which instruction may control the impedance tuning circuit on the first RF path 11 to tune the impedance of the first RF path 11 until the first voltage standing wave ratio falls within the preset standing wave ratio range, thereby ensuring that the first RF path 11 has good operating efficiency.

The embodiments does not specifically limit the preset standing wave ratio range. In some implementations, an appropriate preset standing wave ratio range may be determined based on the efficiency of the working frequency band. A standing wave ratio threshold X may be determined according to the efficiency of the working frequency band of for example -7 dB (this is an example, and the present disclosure is not limited thereto). The preset standing wave ratio range may be 1 to X.

The above is the method for monitoring and tuning the impedance matching of the first RF path 11, and the method for monitoring and tuning the impedance matching of the second RF path 12 may refer to the relevant content of the first RF path 11.

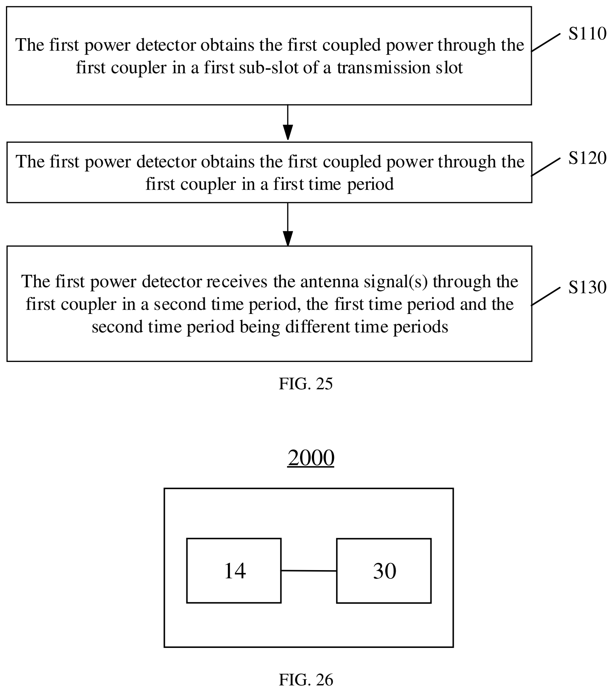

In some implementations, as illustrated in FIG. 25, the operation S100 that the first power detector 13 obtains, through the first coupler 111, the first coupled power received by the first antenna radiator 112 from the second antenna radiator 122 when the second antenna radiator 122 transmits an antenna signal, includes but is not limited to operations S110 to S130 as follows.

S110, the first power detector 13 obtains the first coupled power through the first coupler 111 in a first sub-slot T11 of a transmission slot T1.

The transmission slot T1 refers to a time period during which the second RF path 12 transmits the antenna signal.

Specifically, the first power detector 13 performs detection in the time period during which the second RF path 12 transmits the antenna signal (i.e., the transmission slot T1). This is because that, when the second RF path 12 transmits an antenna signal through the second antenna radiator 122, the first RF path 11 can receive, through the first antenna radiator 112, the antenna signal transmitted by the second antenna radiator 122. At this time, the first power detector 13 can detect the first coupled power.

S120, the first power detector 13 obtains the first coupled power through the first coupler 111 in a first time period.

In conjunction with FIG. 19, at this time, the third switch unit 29 makes the impedance matching branch 28 and the first RF path 11 electrically connected.

S130, the first power detector 13 receives the antenna signal(s) through the first coupler 111 in a second time period, the first time period and the second time period being different time periods.

At this time, the third switch unit 29 makes the receiving channel of the first front-end circuit 18 and the first RF path 11 electrically connected.

In some implementations, during the first time period, the third switch unit 29 is switched to make the first RF path 11 and the impedance matching branch 28 (a resistor of 50 ohms) electrically connected, to detect the impedance matching state of the first RF path 11. During the second time period, the third switch unit 29 is switched to make the first RF path 11 and the receiving channel of the first front-end circuit 18 electrically connected, so that the first front-end circuit 18 performs signal reception through the first RF path 11, thereby forming as a receiving antenna. In other words, although the above two operating modes of the second RF path 12 both use the first RF path 11 and the first power detector 13, they are independent of each other in terms of time and do not cause interference.

In conjunction with the implementation where the first power detector 13 obtains the first coupled power through the first coupler 111 in the first sub-slot T11 of the transmission slot T1, the first sub-slot T11 is the first time period. The first sub-slot T11 is also a time period during which the first RF path 11 does not operate as a receiving antenna.

For example, the first front-end circuit 18, the first RF path 11, and the first antenna radiator 112 together form a receiving antenna, and the second front-end circuit 19, the second RF path 12, and the second antenna radiator 122 together form a transmitting and receiving antenna. The transmitting and receiving antenna transmits an antenna signal at the transmitting frequency band of B3 (1710 MHz to 1785 MHz), and the transmission slot T1 includes a first sub-slot T11 and a second sub-slot T12.

During the first sub-slot T11, the third switch unit 29 makes the first RF path 11 and the impedance matching branch 28 electrically connected, the first RF path 11 receives a transmitted signal at the transmitting frequency band of B3 (1710 MHz to 1785 MHz) through the first antenna radiator 112, and the first power detector 13 monitors the impedance matching state of the first RF path 11 and feeds the monitored result about the impedance matching state back to the processor 14 for impedance tuning of the first RF path 11.

During the second sub-slot T12, the third switch unit 29 makes the first RF path 11 and the first front-end circuit 18 electrically connected, and the first RF path 11 receives a signal at the receiving frequency band of B3 (1805 MHz to 1880 MHz) through the first antenna radiator 112.

As illustrated in FIG. 26, a third embodiment of the present disclosure further provides a communication device 2000. The communication device 2000 includes a processor 14 and a memory 30. The communication device 2000 may be the electronic device 1000 in the first embodiment. The processor 14 is coupled to the memory 30, and the memory 30 is configured to store a computer program. The computer program, when being executed by the processor 14, causes the communication device 2000 to execute the impedance tuning method described in any of the above implementations. The processor 14 may be an application processor (AP) or a baseband processor (BP).

The embodiment is described below in detail with the communication device 2000 as an example. It is understandable that the communication device 2000 illustrated in FIG. 26 is only an example, and it may include more or fewer components than those illustrated in FIG. 26, may combine two or more components, or may have a different component configuration. The components illustrated in FIG. 26 may be implemented through hardware (including one or more signal processing and/or application-specific integrated circuits), software, or a combination of hardware and software.

The communication device 2000 may include but is not limited to the following components: the processor 14, an external memory interface, an internal memory 30, a universal serial bus (USB) interface, a charging management module, a power management module, a battery, an antenna, a mobile communication module, a wireless communication module, an audio module, a speaker, a receiver, a microphone, a headphone interface, a sensor module, a button, a motor, an indicator, a camera, a display screen, and a Subscriber Identity Module (SIM) card interface. The sensor module includes but is not limited to at least one of a pressure sensor, a gyroscope sensor, an air pressure sensor, a magnetic sensor, an acceleration sensor, a distance sensor, a proximity light sensor, a fingerprint sensor, a temperature sensor, a touch sensor, an ambient light sensor, and a bone conduction sensor.

A fourth embodiment of the present disclosure further provides a computer-readable storage medium storing a computer program therein. The computer program, when being executed by the processor 14, causes the processor 14 to execute the method described in any of the above implementations.

It is understandable that, to implement the above functions, the communication device 2000 includes corresponding hardware structures and/or software modules for performing each function. Those skilled in the art should easily realize that, in combination with the units and algorithm operations of the examples described in the embodiments of the disclosure, the embodiments of the present disclosure may be implemented through hardware or a combination of hardware and computer software. Whether a certain function is executed by hardware or computer software driving hardware depends on the specific application and design constraints of the technical solution. Those professional skilled may use different methods to implement the described functions for each specific application, but such implementation should not be considered to be beyond the scope of the embodiments of the present disclosure.

The embodiments of the present disclosure may divide the communication device 2000 into functional modules according to the above exemplary methods. For example, each divided functional module may corresponding to each function, or two or more functions may be integrated into one processing module. The integrated modules may be implemented in the form of hardware or software functional modules. It is notable that the division of modules in the embodiments of the present disclosure is exemplary, and it is only a logical function division. In actual implementation, there may be other division methods. The following is described by taking case where the functional modules are divided based on corresponding modules as an example.

The methods provided in the embodiments of the present disclosure may be fully or partially implemented through software, hardware, firmware, or any combination thereof. When implemented using software, it may be fully or partially implemented in the form of a computer program product. The computer program product includes one or more computer instructions. When the computer instructions are loaded and executed on a computer, all or part of the processes or functions described in the embodiments of the present disclosure are implemented. The computer may be a general-purpose computer, a special-purpose computer, a computer network, a network device, the communication device 2000, or other programmable devices. The computer instructions may be stored in a computer-readable storage medium or transmitted from one computer-readable storage medium to another computer-readable storage medium. For example, the computer instructions may be transmitted from a website, a computer, a server, or a data center to another website, another computer, another server, or another data center in a wired manner (such as a coaxial cable, optical fiber, Digital Subscriber Line (DSL)) or wireless manner (such as infrared, wireless, and microwave). The computer-readable storage medium may be any available medium that can be accessed by a computer, or a data storage device such as a server or a data center that includes one or more available media. The available medium may be a magnetic medium (such as a floppy disk, a hard disk, a magnetic tape), an optical medium (such as a digital video disc (DVD)), or a semiconductor medium (such as a solid-state drive (SSD)).

Those ordinary skilled in the art may realize that the units and algorithm operations of the examples described in the embodiments of the disclosure may be implemented by electronic hardware or a combination of electronic hardware and computer software. Whether these functions are executed by hardware or software depends on the specific application and design constraints of the technical solution. Those professional skilled may use different methods to implement the described functions for each specific application, but such implementation should not be considered to be beyond the scope of the disclosure.

Although the embodiments of the present disclosure have been illustrated and described above, it is understandable that the foregoing embodiments are illustrative and cannot be considered as limitations on the present disclosure. Those ordinary skilled in the art may make changes, modifications, substitutions, and variations to the foregoing embodiments within the scope of the present disclosure, and these improvements and modifications shall all fall within the scope of protection of the present disclosure.

**Claims**

1. A radio frequency system (100), comprising:

a first radio frequency path (11), wherein the first radio frequency path (11) comprises a first coupler (111) and a first antenna radiator (112);

a second radio frequency path (12), wherein the second radio frequency path (12) comprises a second antenna radiator (122), and the first antenna radiator (112) is capable of receiving a coupled signal from the second antenna radiator (122) when the second antenna radiator (122) transmits an antenna signal;

a first power detector (13), wherein the first power detector (13) is electrically connected with the first coupler (111), and is configured to obtain, through the first coupler (111), a first coupled power received by the first antenna radiator (112) from the second antenna radiator (122) when the second antenna radiator (122) transmits the antenna signal; and

a processor (14), wherein the processor (14) is electrically connected with the first power detector (13), and is configured to obtain a first voltage standing wave ratio based on the first coupled power, and generate a first impedance adjustment instruction when the first voltage standing wave ratio is outside a preset standing wave ratio range, the first impedance adjustment instruction being used to make the first voltage standing wave ratio fall within the preset standing wave ratio range.

2. The radio frequency system (100) of claim 1, wherein the second radio frequency path (12) further comprises a second coupler (121), the radio frequency system (100) further comprises a second power detector (16), the second coupler (121) is electrically connected with the second antenna radiator (122), the second power detector (16) is electrically connected with the second coupler (121), and the second power detector (16) is configured to obtain, through the second coupler (121), a second coupled power received by the second antenna radiator (122) from the first antenna radiator (112) when the first antenna radiator (112) transmits an antenna signal;

the processor (14) is further configured to obtain a second voltage standing wave ratio based on the second coupled power, and generate a second impedance adjustment instruction when the second voltage standing wave ratio is outside the preset standing wave ratio range, the second impedance adjustment instruction being used to make the second voltage standing wave ratio fall within the preset standing wave ratio range.

3. The radio frequency system (100) of claim 2, further comprising a first switch unit (17), wherein a first side of the first switch unit (17) is electrically connected with each of the first power detector (13) and the second power detector (16), and a second side of the first switch unit (17) is electrically connected with each of the first coupler (111) and the second coupler (121).

4. The radio frequency system (100) of any one of claims 2 and 3, wherein the first radio frequency path (11) further comprises a first impedance tuning circuit (113), the first impedance tuning circuit (113) is electrically connected between the first antenna radiator (112) and the first coupler (111), the first impedance tuning circuit (113) is configured to receive the first impedance adjustment instruction, and the first impedance adjustment instruction is used to make an impedance of the first impedance tuning circuit (113) tuned so that the first voltage standing wave ratio falls within the preset standing wave ratio range;

wherein the first impedance tuning circuit (113) comprises a first tuning switch (114) and a plurality of first tuning branches (115), one terminal of the first tuning switch (114) is electrically connected with the first antenna radiator (112), and the plurality of first tuning branches (115) are electrically connected with a plurality of selection terminals of the first tuning switch (114) respectively.

5. The radio frequency system (100) of any one of claims 2 to 4, wherein the second radio frequency path (12) further comprises a second impedance tuning circuit (123), the second impedance tuning circuit (123) is electrically connected between the second antenna radiator (122) and the second coupler (121), the second impedance tuning circuit (123) is configured to receive the second impedance adjustment instruction, and the second impedance adjustment instruction is used to make an impedance of the second impedance tuning circuit (123) tuned so that that the second voltage standing wave ratio falls within the preset standing wave ratio range.

6. The radio frequency system (100) of any one of claims 2 to 5, further comprising:

an radio frequency transceiver module (15), configured to transmit and receive antenna signals;

a first front-end circuit (18), wherein one terminal of the first front-end circuit (18) is electrically connected with the radio frequency transceiver module (15), and another terminal of the first front-end circuit (18) is electrically connected with the first coupler (111);

a second front-end circuit (19), wherein one terminal of the second front-end circuit (19) is electrically connected with the radio frequency transceiver module (15), and another terminal of the second front-end circuit (19) is electrically connected with the second coupler (121); and

a second switch unit (27), wherein a terminal at a first side of the second switch unit (27) is selectively electrically connected with the first front-end circuit (18) or the second front-end circuit (19), and a terminal at a second side of the second switch unit (27) is selectively electrically connected with the first radio frequency path (11) or the second radio frequency path (12).

7. The radio frequency system (100) of claim 6, wherein a receiving channel of the first front-end circuit (18) comprises a first low-noise amplifier (181) and a first filter (182), one terminal of the first low-noise amplifier (181) is electrically connected with the radio frequency transceiver module (15), another terminal of the first low-noise amplifier (181) is electrically connected with one terminal of the first filter (182), and another terminal of the first filter (182) is electrically connected with the second switch unit (27); and

a transmitting channel of the second front-end circuit (19) comprises a power amplifier (191), a duplexer (192), and a second filter (193), one terminal of the power amplifier (191) is electrically connected with the radio frequency transceiver module (15), another terminal of the power amplifier (191) is electrically connected with a first terminal of the duplexer (192), one terminal of the second filter (193) is electrically connected with the radio frequency transceiver module (15), another terminal of the second filter (193) is electrically connected with a second terminal of the duplexer (192), and a third terminal of the duplexer (192) is electrically connected with the second switch unit (27);

or,

the second front-end circuit (19) comprises a power amplifier (191), a fourth filter (194), a second low-noise amplifier (195), a third filter (196), and a switch module (197); one terminal of the power amplifier (191) is electrically connected with the radio frequency transceiver module (15), another terminal of the power amplifier (191) is electrically connected with a first terminal of the fourth filter (194), a second terminal of the fourth filter (194) is electrically connected with a first terminal of the switch module (197), and a second terminal of the switch module (197) is electrically connected with the second switch unit (27); and one terminal of the second low-noise amplifier (195) is electrically connected with the radio frequency transceiver module (15), another terminal of the second low-noise amplifier (195) is electrically connected with a first terminal of the third filter (196), and a second terminal of the third filter (196) is electrically connected with a third terminal of the switch module (197).

8. The radio frequency system (100) of claim 6, further comprising an impedance matching branch (28) and a third switch unit (29), one terminal of the third switch unit (29) is electrically connected with the second switch unit (27), a first selection terminal of the third switch unit (29) is electrically connected with one terminal of the impedance matching branch (28), another terminal of the impedance matching branch (28) is grounded, and a second selection terminal of the third switch unit (29) is electrically connected with the first front-end circuit (18);

the third switch unit (29) is configured to make the second switch unit (27) and the impedance matching branch (28) electrically connected, when the radio frequency system (100) works in a frequency division duplex communication mode and the first power detector (13) detects the first coupled power; and

the third switch unit (29) is further configured to make the second switch unit (27) and the first front-end circuit (18) electrically connected, so that the first front-end circuit (18) receives the antenna signals.

9. The radio frequency system (100) of any one of claims 1 to 8, wherein the processor (14) is further configured to: determine a target coupled power, based on the first coupled power, a coupling coefficient of the first coupler (111), and an insertion loss between the first power detector (13) and the first coupler (111); and obtain the first voltage standing wave ratio based on the target coupled power.

10. The radio frequency system (100) of any one of claims 1 to 9, wherein the first power detector (13) is configured to obtain the first coupled power through the first coupler (111) in a first sub-slot of a transmission slot; and the first power detector (13) is further configured to obtain a power of the first radio frequency path (11) through the first coupler (111) in a second sub-slot of the transmission slot, wherein the transmission slot is a time period during which the second radio frequency path (12) transmits the antenna signal.

11. The radio frequency system (100) of claim 6, wherein the first power detector (13) is configured to obtain the first coupled power through the first coupler (111) in a first time period; the first power detector (13) is further configured to receive the antenna signals through the first coupler (111) in a second time period when a receiving channel of the first front-end circuit (18) is switched on, the first time period and the second time period being different time periods.

12. An electronic device (1000), comprising the radio frequency system (100) of any one of claims 1 to 11.

13. An impedance tuning method, for an radio frequency system (100), wherein the radio frequency system (100) comprises a first radio frequency path (11), a second radio frequency path (12), a first power detector (13), and a processor (14); the first radio frequency path (11) comprises a first coupler and a first antenna radiator (112); the second radio frequency path (12) comprises a second antenna radiator (122); the first antenna radiator (112) is capable of receiving a coupled signal from the second antenna radiator (122) when the second antenna radiator (122) transmits an antenna signal; the first power detector (13) is electrically connected with the first coupler (111); and the method comprises:

obtaining (S100), by the first power detector (13) through the first coupler (111), a first coupled power received by the first antenna radiator (112) from the second antenna radiator (122) when the second antenna radiator (122) transmits the antenna signal;
obtaining (S200), by the processor (14), a first voltage standing wave ratio based on the first coupled power; and
generating (S300), by the processor (14), a first impedance adjustment instruction in response to the first voltage standing wave ratio being outside a preset standing wave ratio range, wherein the first impedance adjustment instruction is used to make the first voltage standing wave ratio fall within the preset standing wave ratio range.

14. The method of claim 13, wherein the first radio frequency path (11) further comprises a first impedance tuning circuit (113), the first impedance tuning circuit (113) is electrically connected between the first antenna radiator (112) and the first coupler (111); and after the generating (S300), by the processor (14), the first impedance adjustment instruction in response to the first voltage standing wave ratio being outside the preset standing wave ratio range, the method further comprises:

receiving (S400), by the first impedance tuning circuit (113), the first impedance adjustment instruction, wherein the first impedance adjustment instruction is used to make an impedance of the first impedance tuning circuit (113) tuned so that the first voltage standing wave ratio falls within the preset standing wave ratio range;
wherein the obtaining, by the processor (14), the first voltage standing wave ratio based on the first coupled power comprises:

determining (S210), by the processor (14), a target coupled power, based on the first coupled power, a coupling coefficient of the first coupler (111), and an insertion loss between the first power detector (13) and the first coupler (111); and
obtaining (S220), by the processor (14), the first voltage standing wave ratio based on the target coupled power.

15. The method of claim 13, wherein the obtaining, by the first power detector (13) through the first coupler (111), the first coupled power received by the first antenna radiator (112) from the second antenna radiator (122) when the second antenna radiator (122) transmits the antenna signal, comprises:

obtaining (S110), by the first power detector (13), the first coupled power through the first coupler (111) in a first sub-slot of a transmission slot; and
obtaining, by the first power detector (13), a power of the first radio frequency path (11) through the first coupler (111) in a second sub-slot of the transmission slot, the transmission slot being a time period during which the second radio frequency path (12) transmits the antenna signal.

FIG. 1

FIG. 2

FIG. 3

FIG. 4

24

FIG. 5

FIG. 6

FIG. 7

FIG. 8

100    12

FIG. 9

11

FIG. 10

FIG. 11

FIG. 12

FIG. 13

FIG. 14

FIG. 15

FIG. 16

FIG. 17

FIG. 18

FIG. 19

FIG. 20

FIG. 21

| The first power detector obtains, through the first coupler, a first coupled power received by the first antenna radiator from the second antenna radiator when the second antenna radiator transmits the antenna signal | S100 |

| The processor obtains a first voltage standing wave ratio based on the first coupled power | S200 |

| The processor generates, when the first voltage standing wave ratio is outside the preset standing wave ratio range, a first impedance adjustment instruction which is used to make the first voltage standing wave ratio fall within the preset standing wave ratio range | S300 |

FIG. 22

The first power detector obtains, through the first coupler, a first coupled power received by the first antenna radiator from the second antenna radiator when the second antenna radiator transmits the antenna signal — S100

The processor obtains a first voltage standing wave ratio based on the first coupled power — S200

The processor generates, when the first voltage standing wave ratio is outside the preset standing wave ratio range, a first impedance adjustment instruction which is used to make the first voltage standing wave ratio fall within the preset standing wave ratio range — S300

The first impedance tuning circuit receives the first impedance adjustment instruction, the first impedance adjustment instruction is used to make an impedance of the first impedance tuning circuit tuned so that the first voltage standing wave ratio falls within the preset standing wave ratio range — S400

FIG. 23

The processor determines a target coupled power, based on the first coupled power, a coupling coefficient of the first coupler, and an insertion loss between the first power detector and the first coupler — S210

The processor obtains the first voltage standing wave ratio based on the target coupled power — S220

FIG. 24

The first power detector obtains the first coupled power through the first coupler in a first sub-slot of a transmission slot ⟋ S110

The first power detector obtains the first coupled power through the first coupler in a first time period ⟋ S120

The first power detector receives the antenna signal(s) through the first coupler in a second time period, the first time period and the second time period being different time periods ⟋ S130

FIG. 25

2000

| 14 | 30 |

FIG. 26

Europäisches
Patentamt

European
Patent Office

Office européen
des brevets

## EUROPEAN SEARCH REPORT

**Application Number**

EP 25 22 3840

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2014/315501 A1 (RUDELL JACQUES CHRISTOPHE [US] ET AL) 23 October 2014 (2014-10-23) * paragraphs [0043] - [0049]; figures 2A, 2B * | 1-15 | INV. H04B1/04 H04B1/525 H04B1/18 |
| A | WO 2024/126746 A1 (FOREFRONT RF LTD [GB]) 20 June 2024 (2024-06-20) * page 18, line 19 - page 23, line 7 * | 1-15 | |
| A | KR 2021 0151601 A (INDUSTRY ACADEMIC COOPERATION FOUNDATION OF YEUNGNAM UNIV [KR] ET AL.) 14 December 2021 (2021-12-14) * paragraphs [0060] - [0069]; figure 4 * | 1-15 | |

**TECHNICAL FIELDS SEARCHED (IPC)**

H04B

The present search report has been drawn up for all claims

| Place of search | Date of completion of the search | Examiner |
|---|---|---|
| Munich | 2 March 2026 | Ciccarese, Corrado |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

 

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 25 22 3840

This annex lists the patent family members relating to the patent documents cited in the above-mentioned European search report.
The members are as contained in the European Patent Office EDP file on
The European Patent Office is in no way liable for these particulars which are merely given for the purpose of information.

02-03-2026

| Patent document cited in search report | Publication date | Patent family member(s) | | Publication date |
|---|---|---|---|---|
| US 2014315501 A1 | 23-10-2014 | NONE | | |
| WO 2024126746 A1 | 20-06-2024 | CN | 120584462 A | 02-09-2025 |
| | | EP | 4635090 A1 | 22-10-2025 |
| | | KR | 20250121117 A | 11-08-2025 |
| | | WO | 2024126746 A1 | 20-06-2024 |
| KR 20210151601 A | 14-12-2021 | KR | 20210151601 A | 14-12-2021 |
| | | KR | 20220012368 A | 03-02-2022 |

EPO FORM P0459

For more details about this annex : see Official Journal of the European Patent Office, No. 12/82